(19) Europäisches Patentamt / European Patent Office / Office européen des brevets

(11) **EP 3 185 629 B1**

(12) **EUROPEAN PATENT SPECIFICATION**

(45) Date of publication and mention
of the grant of the patent:
**07.08.2019 Bulletin 2019/32**

(51) Int Cl.:
***H04W 72/04*** *(2009.01)*    ***H04B 7/024*** *(2017.01)*
***H04J 11/00*** *(2006.01)*

(21) Application number: **14899974.1**

(22) Date of filing: **20.08.2014**

(86) International application number:
**PCT/CN2014/084832**

(87) International publication number:
**WO 2016/026107 (25.02.2016 Gazette 2016/08)**

(54) **WIRELESS COMMUNICATION METHOD, DEVICE AND BASE STATION**

DRAHTLOSKOMMUNIKATIONSVERFAHREN, VORRICHTUNG UND BASISSTATION

DISPOSITIF, PROCÉDÉ DE COMMUNICATION SANS FIL ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2017 Bulletin 2017/26**

(73) Proprietor: **Huawei Technologies Co., Ltd.
Longgang District
Shenzhen, Guangdong 518129 (CN)**

(72) Inventor: **LIU, Sheng
Shenzhen, Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
WO-A1-2012/119314    CN-A- 102 378 205
US-A1- 2012 077 511    US-A1- 2012 190 378

**Description**

**TECHNICAL FIELD**

The present i relates to the field of communications technologies, and in particular, to a wireless communication method, an apparatus, and a base station.

**BACKGROUND**

As mobile broadband continuously develops, a system capacity may be effectively increased to meet a capacity requirement in a hotspot area by arranging a small cell (where a small cell may be referred to as Small Cell in English, a small cell may be a Pico cell, a Micro cell, or the like, and a pico base station may be Pico for short) in some hotspot areas within a macro cell (which is referred to as Macro Cell in English, and a macro base station may be Macro for short), that is, in a manner of constructing a HetNet (Heterogeneous Network, heterogeneous network).

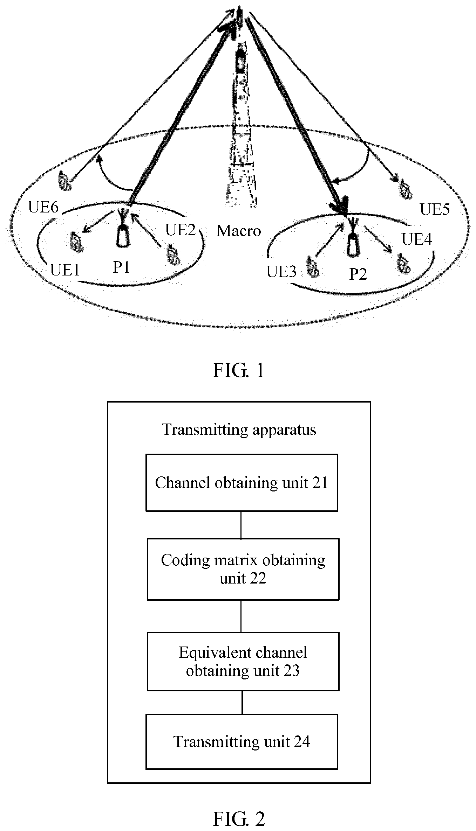

As shown in FIG. 1, there are two pico base stations P1 and P2 in a macro cell covered by a macro base station Macro, and P1 and P2 form two small cells. UE1 and UE2 communicate with P1, UE3 and UE4 communicate with P2, and UE6 and UE5 communicate with the macro base station. If full-duplex communication is used in both the macro base station and the pico base station, in addition to self-interference caused by full-duplex communication in the macro base station and the pico base station, two types of mutual interference exist between the macro base station and the pico base station due to intra-frequency concurrent transmission and reception:

A first type is interference from pico transmission to macro reception (Pico Transmission to Macro Reception, PT2M), that is, interference caused to uplink reception of a macro base station by a downlink signal transmitted by a full-duplex pico base station to UE served by the full-duplex pico base station, for example, in FIG. 1, a downlink signal transmitted from P1 to UE1 causes interference to receiving an uplink signal from UE6 by a macro base station.

A second type is interference from macro transmission to pico reception (Macro Transmission to Pico Reception, MT2P), that is, interference caused to uplink reception of a pico base station by a downlink signal transmitted by a full-duplex macro base station to UE served by the full-duplex macro base station, for example, in FIG. 1, a downlink signal transmitted from a macro base station to UE5 causes interference to receiving an uplink signal from UE3 by a pico base station.

It may be learned that PT2M interference has the following characteristics: a transmit power of each pico base station is less than that of a macro base station, but the interference comes from multiple pico base stations, and a pico base station closer to the macro base station has greater interference to the macro base station; MT2P interference has the following characteristics: a transmit power of a macro base station is relatively large and causes interference to all pico base stations, and a pico base station closer to the macro base station is more severely interfered.

In practice, a path loss between a pico base station and a macro base station may be greatly increased by properly selecting a site of the pico base station, adjusting a beam direction, proactively shielding a direct path between an antenna of the pico base station and an antenna of the macro base station, or the like. For example, beams of the pico base station and the macro base station are both in a direction pointing to UE, and main lobes of the beams of the pico base station and the macro base station do not point to each other, which are inherently beneficial for relieving the foregoing two types of mutual interference between transmission and reception. If the pico base station is set up indoors, or there is no light of sight (Light of Sight, LOS) between the antenna of the pico base station and the antenna of the macro base station because the antenna of the pico base station is blocked by a building, this is also beneficial for relieving the foregoing two types of mutual interference between transmission and reception. Even if there is light of sight between the antenna of the pico base station and the antenna of the macro base station, a path loss between the pico base station and the macro base station may be increased by means of electromagnetic absorption, shielding, blocking, or the like. However, because a power of a receive signal from the UE is extremely low as compared with transmit powers of the macro base station and the pico base station, even if a level of interference between the pico base station and the macro base station may be effectively reduced by taking the foregoing measures, impact of the foregoing two types of mutual interference between transmission and reception still cannot be effectively prevented from affecting receiving an uplink signal from UE by the pico base station and the macro base station.

US 2014/010197 A1 deals with the interference between base stations and user equipment. In particular, this document discloses a method according to the preamble features 1.1-1.3 of claim 1 and a transmitting apparatus according to the preamble features a)-c) of claim 2.

**SUMMARY**

The present invention aims to provide a wireless communication method, a transmitting apparatus as well as a base station, which can effectively suppress interference.

To achieve the foregoing objective, the technical solutions are contained in a wireless communication method according to claim 1, a transmitting apparatus according to claim 2 and a base station according to claim 3. The technical solutions according to claim 1, claim 2 and claim 3 will be further explained below in the embodiments of the present invention. However, hereinafter, first general aspects of the present invention should be highlighted before coming to the description of the detailed embodiments. Some of the aspects described below do not directly relate to the invention but serve the general explanations for understanding the invention.

According to a first aspect, a wireless communication method is provided, including:

obtaining a first channel matrix that is from a first base station to a second base station;
obtaining a second channel matrix that is from the first base station to user equipment served by the first base station;
obtaining, based on the first channel matrix, a first precoding matrix, where the first precoding matrix is constituted by a null space vector of the first channel matrix;
obtaining a first equivalent channel matrix that is from the first base station to the user equipment served by the first base station, where the first equivalent channel matrix is a product of the second channel matrix and the first precoding matrix; and
selecting, based on the first equivalent channel matrix, a second precoding matrix for a transmit signal, performing precoding on the transmit signal according to the second precoding matrix, and sending a precoded transmit signal.

With reference to the first aspect, in a first possible implementation manner, the first base station is a pico base station, the second base station is a macro base station, and a macro cell corresponding to the macro base station includes a small cell corresponding to the pico base station; and
when a quantity of transmit antennas of the first base station is greater than a quantity of receive antennas of the second base station, the obtaining, based on the first channel matrix, a first precoding matrix, where the first precoding matrix is constituted by a null space vector of the first channel matrix includes:

obtaining, based on the first channel matrix, the null space vector of the first channel matrix; and
constituting the first precoding matrix by using the null space vector of the first channel matrix.

With reference to the first aspect, in a second possible implementation manner, the first base station is a pico base station, the second base station is a macro base station, and a macro cell corresponding to the macro base station includes a small cell corresponding to the pico base station; and
when a quantity of transmit antennas of the first base station is less than or equal to a quantity of receive antennas of the second base station,
the method further includes:
obtaining a beamforming matrix with DxN dimensions, where N is the quantity of the receive antennas of the second base station, and D is a quantity of equivalent receive antennas of the second base station; and
obtaining, according to the beamforming matrix, a second equivalent channel matrix corresponding to the first channel matrix; and
the obtaining, based on the first channel matrix, a first precoding matrix, where the first precoding matrix is constituted by a null space vector of the first channel matrix includes:
obtaining, based on the second equivalent channel matrix, the first precoding matrix, where the first precoding matrix is constituted by a null space vector of the second equivalent channel matrix.

With reference to the first aspect, in a third possible implementation manner, the first base station is a macro base station, the second base station is a pico base station, and a macro cell corresponding to the macro base station includes a small cell corresponding to the pico base station; and
when a quantity of transmit antennas of the first base station is greater than a total quantity of receive antennas of all second base stations that communicate with the first base station,
the obtaining, based on the first channel matrix, a first precoding matrix, where the first precoding matrix is constituted by a null space vector of the first channel matrix includes:

obtaining, based on the first channel matrix, the null space vector of the first channel matrix; and
constituting the first precoding matrix by using the null space vector of the first channel matrix.

With reference to the first aspect, in a fourth possible implementation manner, the first base station is a macro base station, the second base station is a pico base station, and a macro cell corresponding to the macro base station includes a small cell corresponding to the pico base station; and
when a quantity of transmit antennas of the first base station is less than or equal to a total quantity of receive antennas of all second base stations that communicate with the first base station,

the method further includes:

obtaining a beamforming matrix with $J_m \times N_m$ dimensions, where $N_m$ is a quantity of receive antennas of the $m^{th}$ second base station that communicates with the first base station, $J_m$ is a quantity of equivalent receive antennas of the $m^{th}$ second base station that communicates with the first base station, $m = 1,2,\cdots L$, and L is a total quantity of pico base stations in the macro cell; and
obtaining, according to the beamforming matrix, a second equivalent channel matrix corresponding to the first channel matrix; and
the obtaining, based on the first channel matrix, a first precoding matrix, where the first precoding matrix is constituted by a null space vector of the first channel matrix includes:
obtaining, based on the second equivalent channel matrix, the first precoding matrix, where the first precoding matrix is constituted by a null space vector of the second equivalent channel matrix.

According to a second aspect, a wireless communication method is provided, where the method is used in a wireless communications system, and in the wireless communications system, a macro cell corresponding to a macro base station includes a small cell corresponding to a pico base station, and the method includes:

obtaining a first channel matrix that is from the pico base station to the macro base station;
obtaining, based on the first channel matrix, a first beamforming matrix, where the first beamforming matrix is constituted by a null space vector of the first channel matrix; and
receiving, by using the first beamforming matrix, a signal sent by user equipment served by the macro base station.

With reference to the second aspect, in a first possible implementation manner, the obtaining, based on the first channel matrix, a first beamforming matrix, where the first beamforming matrix is constituted by a null space vector of the first channel matrix includes:

obtaining, based on the first channel matrix, the null space vector of the first channel matrix; and
constituting the first beamforming matrix by using the null space vector of the first channel matrix.

According to a third aspect, a transmitting apparatus is provided, including:

a channel obtaining unit, configured to obtain a first channel matrix that is from a first base station to a second base station, where
the channel obtaining unit is further configured to obtain a second channel matrix that is from the first base station to user equipment served by the first base station;
a coding matrix obtaining unit, configured to obtain, based on the first channel matrix obtained by the channel obtaining unit, a first precoding matrix, where the first precoding matrix is constituted by a null space vector of the first channel matrix;
an equivalent channel obtaining unit, configured to obtain a first equivalent channel matrix that is from the first base station to the user equipment served by the first base station, where the first equivalent channel matrix is a product of the second channel matrix and the first precoding matrix, and
the coding matrix obtaining unit is further configured to select, based on the first equivalent channel matrix obtained by the equivalent channel obtaining unit, a second precoding matrix for a transmit signal; and
a transmitting unit, configured to: perform precoding on the transmit signal according to the second precoding matrix obtained by the coding matrix obtaining unit, and send a precoded transmit signal.

With reference to the third aspect, in a first possible implementation manner, the first base station is a pico base station, the second base station is a macro base station, and a macro cell corresponding to the macro base station includes a small cell corresponding to the pico base station; and
when a quantity of transmit antennas of the first base station is greater than a quantity of receive antennas of the second base station, the coding matrix obtaining unit is specifically configured to: obtain, based on the first channel matrix, the null space vector of the first channel matrix, and constitute the first precoding matrix by using the null space vector of the first channel matrix.
With reference to the third aspect, in a second possible implementation manner, the first base station is a pico base station, the second base station is a macro base station, and a macro cell corresponding to the macro base station includes a small cell corresponding to the pico base station; and
when a quantity of transmit antennas of the first base station is less than or equal to a quantity of receive antennas of the second base station,

the apparatus further includes: a beamforming unit, configured to obtain a beamforming matrix with DxN dimensions, where N is the quantity of the receive antennas of the second base station, and D is a quantity of equivalent receive antennas of the second base station;

the equivalent channel obtaining unit is further configured to obtain, according to the beamforming matrix obtained by the beamforming unit, a second equivalent channel matrix corresponding to the first channel matrix; and

the coding matrix obtaining unit is specifically configured to obtain, based on the second equivalent channel matrix obtained by the equivalent channel obtaining unit, the first precoding matrix, where the first precoding matrix is constituted by a null space vector of the second equivalent channel matrix.

With reference to the third aspect, in a third possible implementation manner, the first base station is a macro base station, the second base station is a pico base station, and a macro cell corresponding to the macro base station includes a small cell corresponding to the pico base station; and

when a quantity of transmit antennas of the first base station is greater than a total quantity of receive antennas of all second base stations that communicate with the first base station,

the coding matrix obtaining unit is specifically configured to: obtain, based on the first channel matrix, the null space vector of the first channel matrix, and constitute the first precoding matrix by using the null space vector of the first channel matrix.

With reference to the third aspect, in a fourth possible implementation manner, the first base station is a macro base station, the second base station is a pico base station, and a macro cell corresponding to the macro base station includes a small cell corresponding to the pico base station; and

when a quantity of transmit antennas of the first base station is less than or equal to a total quantity of receive antennas of the second base station,

the apparatus further includes: a beamforming unit, configured to obtain a beamforming matrix with $J_m \times N_m$ dimensions, where $N_m$ is a quantity of receive antennas of the $m^{th}$ second base station that communicates with the first base station, $J_m$ is a quantity of equivalent receive antennas of the $m^{th}$ second base station that communicates with the first base station, $m = 1,2,\cdots L$, and L is a total quantity of pico base stations in the macro cell;

the equivalent channel obtaining unit is further configured to obtain, according to the beamforming matrix obtained by the beamforming unit, a second equivalent channel matrix corresponding to the first channel matrix; and

the coding matrix obtaining unit is specifically configured to obtain, based on the second equivalent channel matrix obtained by the equivalent channel obtaining unit, the first precoding matrix, where the first precoding matrix is constituted by a null space vector of the second equivalent channel matrix.

According to a fourth aspect, a receiving apparatus is provided, where the apparatus is used in a wireless communications system, and in the wireless communications system, a macro cell corresponding to a macro base station includes a small cell corresponding to a pico base station, and the apparatus includes:

a channel obtaining unit, configured to obtain a first channel matrix that is from the pico base station to the macro base station;

a beamforming matrix obtaining unit, configured to obtain, based on the first channel matrix obtained by the channel obtaining unit, a first beamforming matrix, where the first beamforming matrix is constituted by a null space vector of the first channel matrix; and

a receiving unit, configured to receive, by using the first beamforming matrix obtained by the beamforming matrix obtaining unit, a signal sent by user equipment served by the macro base station.

With reference to the fourth aspect, in a first possible implementation manner, the beamforming matrix obtaining unit is specifically configured to: obtain, based on the first channel matrix, the null space vector of the first channel matrix, and constitute the first beamforming matrix by using the null space vector of the first channel matrix.

According to a fifth aspect, a transmitting apparatus is provided, including: a processor, a memory, a transmitter, and a bus, where the bus connects the processor, the memory, and the transmitter for data transmission, and the memory is configured to store data processed by the processor;

the processor is configured to: obtain a first channel matrix that is from a first base station to a second base station; obtain a second channel matrix that is from the first base station to user equipment served by the first base station; obtain, based on the first channel matrix, a first precoding matrix, where the first precoding matrix is constituted by a null space vector of the first channel matrix; obtain a first equivalent channel matrix that is from the first base station to the user equipment served by the first base station, where the first equivalent channel matrix is a product of the second channel matrix and the first precoding matrix; and select, based on the first equivalent channel matrix obtained by the processor, a second precoding matrix for a transmit signal; and

the transmitter is configured to: perform precoding on the transmit signal according to the second precoding matrix obtained by the processor, and send a precoded transmit signal.

With reference to the fifth aspect, in a first possible implementation manner, the first base station is a pico base station, the second base station is a macro base station, and a macro cell corresponding to the macro base station includes a small cell corresponding to the pico base station; and

when a quantity of transmit antennas of the first base station is greater than a quantity of receive antennas of the second base station, the processor is specifically configured to: obtain, based on the first channel matrix, the null space vector of the first channel matrix, and constitute the first precoding matrix by using the null space vector of the first channel matrix.

With reference to the fifth aspect, in a second possible implementation manner, the first base station is a pico base station, the second base station is a macro base station, and a macro cell corresponding to the macro base station includes a small cell corresponding to the pico base station; and

when a quantity of transmit antennas of the first base station is less than or equal to a quantity of receive antennas of the second base station,

the processor is further configured to: obtain a beamforming matrix with DxN dimensions, where N is the quantity of the receive antennas of the second base station, and D is a quantity of equivalent receive antennas of the second base station; and obtain, according to the beamforming matrix, a second equivalent channel matrix corresponding to the first channel matrix; and

the processor is specifically configured to obtain, based on the second equivalent channel matrix, the first precoding matrix, where the first precoding matrix is constituted by a null space vector of the second equivalent channel matrix.

With reference to the fifth aspect, in a third possible implementation manner, the first base station is a macro base station, the second base station is a pico base station, and a macro cell corresponding to the macro base station includes a small cell corresponding to the pico base station; and

when a quantity of transmit antennas of the first base station is greater than a total quantity of receive antennas of all second base stations that communicate with the first base station,

the processor is specifically configured to: obtain, based on the first channel matrix, the null space vector of the first channel matrix, and constitute the first precoding matrix by using the null space vector of the first channel matrix.

With reference to the fifth aspect, in a fourth possible implementation manner, the first base station is a macro base station, the second base station is a pico base station, and a macro cell corresponding to the macro base station includes a small cell corresponding to the pico base station; and

when a quantity of transmit antennas of the first base station is less than or equal to a total quantity of receive antennas of the second base station,

the processor is further configured to: obtain a beamforming matrix with $J_m \times N_m$ dimensions, where $N_m$ is a quantity of receive antennas of the $m^{th}$ second base station that communicates with the first base station, $J_m$ is a quantity of equivalent receive antennas of the $m^{th}$ second base station that communicates with the first base station, $m = 1,2,\cdots L$, and L is a total quantity of pico base stations in the macro cell; and obtain, according to the beamforming matrix, a second equivalent channel matrix corresponding to the first channel matrix; and

the processor is specifically configured to obtain, based on the second equivalent channel matrix, the first precoding matrix, where the first precoding matrix is constituted by a null space vector of the second equivalent channel matrix.

According to a sixth aspect, a receiving apparatus is provided, where the apparatus is used in a wireless communications system, and in the wireless communications system, a macro cell corresponding to a macro base station includes a small cell corresponding to a pico base station, and the apparatus includes: a processor, a memory, a receiver, and a bus, where the bus connects the processor, the memory, and the receiver for data transmission, and the memory is configured to store data processed by the processor;

the processor is configured to: obtain a first channel matrix that is from the pico base station to the macro base station, and obtain, based on the first channel matrix, a first beamforming matrix, where the first beamforming matrix is constituted by a null space vector of the first channel matrix; and

the receiver is configured to receive, by using the first beamforming matrix obtained by the processor, a signal sent by user equipment served by the macro base station.

With reference to the sixth aspect, in a first possible implementation manner, the processor is specifically configured to: obtain, based on the first channel matrix, the null space vector of the first channel matrix, and constitute the first beamforming matrix by using the null space vector of the first channel matrix.

According to a seventh aspect, a base station is provided, including the transmitting apparatus according to the third aspect or any one of the possible implementation manners of the third aspect; or

including the transmitting apparatus according to the fifth aspect or any one of the possible implementation manners of the fifth aspect.

With reference to the seventh aspect, in a first possible implementation manner, the base station is a macro base station or a pico base station when the base station includes the transmitting apparatus according to the third aspect or the fifth aspect;

the base station is a pico base station when the base station includes the transmitting apparatus according to any one of the first possible implementation manner of the third aspect, the second possible implementation manner of the third aspect, the first possible implementation manner of the fifth aspect, or the second possible implementation manner of the fifth aspect; or

the base station is a macro base station when the base station includes the transmitting apparatus according to any one of the third possible implementation manner of the third aspect, the fourth possible implementation manner of the third aspect, the third possible implementation manner of the fifth aspect, or the fourth possible implementation manner of the fifth aspect.

According to an eighth aspect, a base station is provided, including the receiving apparatus according to the fourth aspect or any one of the possible implementation manners of the fourth aspect; or

including the receiving apparatus according to the fifth aspect or any one of the possible implementation manners of the fifth aspect.

With reference to the eighth aspect, in a first possible implementation manner, the base station is a macro base station.

According to the wireless communication method, the apparatus, and the base station that are provided above, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a pico base station and the second base station is a macro base station, impact of PT2M interference on receiving an uplink signal from UE by the macro base station can be suppressed; when the first base station is a macro base station and the second base station is a pico base station, impact of MT2P interference on receiving an uplink signal from UE by the pico base station can be suppressed. Alternatively, a first beamforming matrix is constituted by a null space vector of a first channel matrix that is from a pico base station to a macro base station, and a signal sent by user equipment served by the macro base station is received by using the first beamforming matrix. Because the first beamforming matrix is constituted by the null space vector of the first channel matrix, a product of the first channel matrix and the first beamforming matrix is zero or approximately zero. Therefore, impact of PT2M interference on receiving an uplink signal from UE by the macro base station can be suppressed.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic structural diagram of a wireless communications system;

FIG. 2 is a schematic structural diagram of a transmitting apparatus according to an embodiment of the present invention;

FIG. 3 is a schematic structural diagram of a wireless communications system according to an embodiment of the present invention;

FIG. 4 is a schematic structural diagram of another transmitting apparatus according to an embodiment of the present invention;

FIG. 5 is a schematic structural diagram of another wireless communications system according to an embodiment of the present invention;

FIG. 6 is a schematic structural diagram of a receiving apparatus according to an embodiment of the present invention;

FIG. 7 is a schematic structural diagram of still another wireless communications system according to an embodiment of the present invention;

FIG. 8 is a schematic flowchart of a wireless communication method according to an embodiment of the present invention;

FIG. 9 is a schematic flowchart of another wireless communication method according to an embodiment of the present invention;

FIG. 10 is a schematic structural diagram of still another transmitting apparatus according to an embodiment of the present invention; and

FIG. 11 is a schematic structural diagram of another receiving apparatus according to an embodiment of the present invention.

## DESCRIPTION OF EMBODIMENTS

Multiple embodiments are described with reference to the accompanying drawings, and same components in this specification are indicated by a same reference numeral. In the following description, for ease of explanation, many specific details are provided to facilitate comprehensive understanding of one or more embodiments. However, apparently, the embodiments may either not be implemented by using these specific details. In other examples, a well-known structure and device are shown in a form of block diagrams, to conveniently describe one or more embodiments.

User equipment (UE, User Equipment) provided in the embodiments of the present invention may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, an in-vehicle device, a wearable device, a computing device, or another processing device connected to a wireless modem.

A base station provided in the embodiments of the present invention may be configured to communicate with the user equipment. The base station may be an access device, such as an AP (Access Point, radio access point) in WiFi, or a BTS (Base Transceiver Station, base transceiver station) in a GSM (Global System of Mobile communication, Global System for Mobile Communications) or CDMA (Code Division Multiple Access, Code Division Multiple Access), or may be an NB (NodeB, NodeB) in WCDMA (Wideband Code Division Multiple Access, Wideband Code Division Multiple Access), or may be an eNB or an eNodeB (Evolutional Node B, evolved NodeB) in LTE (Long Term Evolution, Long Term Evolution), or a relay or an access point, or an access device in a future 5G network, or the like. Moreover, the base station includes at least two types of base stations used for constructing a heterogeneous network: a macro base station and a pico base station, and a macro cell corresponding to the macro base station may include a small cell corresponding to the pico base station.

A transmitting apparatus and a receiving apparatus provided in the embodiments of the present invention may be disposed in or be a macro base station or a pico base station.

The embodiments of the present invention may be specifically used in a wireless communications system formed by a HetNet network and shown in FIG. 1, including a macro base station Macro, pico base stations (PI and P2), and at least one user equipment (UE1 to UE6). UE1 and UE2 communicate with P1, UE3 and UE4 communicate with P2, and UE6 and UE5 communicate with the macro base station.

As shown in FIG. 2, an embodiment of the present invention provides a transmitting apparatus that is used in the foregoing wireless communications system formed by the HetNet network. A specific transmitting apparatus may be disposed in or be a macro base station Macro or a pico base station (PI or P2). The transmitting apparatus includes:

a channel obtaining unit 21, configured to obtain a first channel matrix that is from a first base station to a second base station, where

the channel obtaining unit 21 is further configured to obtain a second channel matrix that is from the first base station to user equipment served by the first base station;

a coding matrix obtaining unit 22, configured to obtain, based on the first channel matrix obtained by the channel obtaining unit 21, a first precoding matrix, where the first precoding matrix is constituted by a null space vector of the first channel matrix;

an equivalent channel obtaining unit 23, configured to obtain a first equivalent channel matrix that is from the first base station to the user equipment served by the first base station, where the first equivalent channel matrix is a product of the second channel matrix and the first precoding matrix, and

the coding matrix obtaining unit 22 is further configured to select, based on the first equivalent channel matrix obtained by the equivalent channel obtaining unit 23, a second precoding matrix for a transmit signal; and

a transmitting unit 24, configured to: perform precoding on the transmit signal according to the second precoding matrix obtained by the coding matrix obtaining unit 22, and send a precoded transmit signal.

Optionally, the first base station is a pico base station corresponding to a small cell and the second base station is a macro base station corresponding to a macro cell; or the first base station is a macro base station corresponding to a macro cell and the second base station is a pico base station corresponding to a small cell.

According to the transmitting apparatus provided in this embodiment of the present invention, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a pico base station and the second base station is a macro base station, impact of PT2M interference on receiving an uplink signal from UE by the macro base station can be suppressed; when the first base station is a macro base station and the second base station is a pico base station, impact of MT2P interference on receiving an uplink signal from UE by the pico base station can be suppressed.

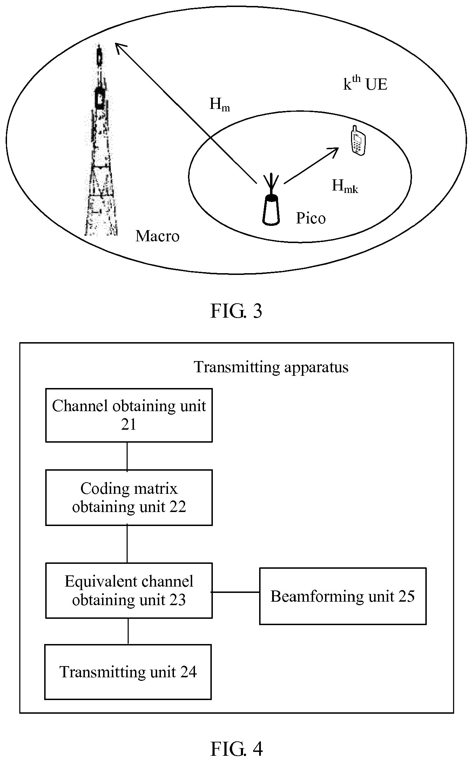

Specifically, as shown in FIG. 3, suppression of PT2M interference is used as an example for description. In FIG. 3, quantities of transmit antennas and receive antennas of a macro base station are $M$ and $N$ respectively, and quantities of transmit antennas and receive antennas of the m$^{th}$ pico base station are $M_m$ and $N_m$ respectively. A channel matrix that is from the m$^{th}$ pico base station in a macro cell to the macro base station is $\mathbf{H}_m$, where $m = 1,2,\cdots L$, L is a total quantity of pico base stations in the macro cell, and $\mathbf{H}_m$ is a matrix with $N \times M_m$ dimensions. A channel matrix that is from the m$^{th}$ pico base station to the k$^{th}$ UE served by the m$^{th}$ pico base station is $\mathbf{H}_{mk}$, where $k = 1,2,\cdots K_m$, and $K_m$ is a quantity of users served by the m$^{th}$ pico base station. Specifically, the first base station is the pico base station, the second base station is the macro base station, the transmitting apparatus is the pico base station or a control entity disposed in the pico base station, and as shown in FIG. 2, specific functions of the transmitting apparatus are described as follows:

A channel obtaining unit 21 is configured to obtain a first channel matrix $\mathbf{H}_m$ that is from the pico base station to the macro base station.

This may be obtained by using an existing channel estimation technology well known to persons skilled in the art. The first channel matrix $\mathbf{H}_m$ may be directly obtained by the pico base station, for example, the macro base station may obtain an estimation of the channel matrix $\mathbf{H}_m$ by using a reference symbol included in a downlink signal transmitted by the pico base station, and forward an estimation result to the pico base station through a backhaul channel. Alternatively, the pico base station may directly obtain an estimation of the channel matrix $\mathbf{H}_m$ by using a reference symbol included in a downlink signal transmitted by the macro base station.

The channel obtaining unit 21 is further configured to obtain a second channel matrix $\mathbf{H}_{mk}$ that is from the pico base station to user equipment UE served by the pico base station.

This may be obtained by using an existing channel estimation technology well known to persons skilled in the art. The second channel matrix $\mathbf{H}_{mk}$ may be directly obtained by the pico base station, for example, the k$^{th}$ UE may obtain an estimation of the channel matrix $\mathbf{H}_{mk}$ by using a reference symbol included in a downlink signal transmitted by the pico base station, and report an estimation result to the pico base station. Alternatively, because reception and transmission are intra-frequency, by making use of channel reciprocity, the pico base station may directly obtain an estimation of the channel matrix $\mathbf{H}_{mk}$ by using a reference symbol included in an uplink signal transmitted by the k$^{th}$ UE.

A coding matrix obtaining unit 22 is configured to obtain, based on the first channel matrix $\mathbf{H}_m$ obtained by the channel obtaining unit 21, a first precoding matrix $\mathbf{P}_m$, where the first precoding matrix $\mathbf{P}_m$ is constituted by a null space vector of the first channel matrix $\mathbf{H}_m$, and therefore, $\mathbf{P}_m$ meets $\mathbf{H}_m\mathbf{P}_m = 0$.

An equivalent channel obtaining unit 23 is configured to obtain a first equivalent channel matrix $\mathbf{H}_{mk}\mathbf{P}_m$ that is from the pico base station to the user equipment served by the pico base station, where the first equivalent channel matrix $\mathbf{H}_{mk}\mathbf{P}_m$ is a product of the second channel matrix $\mathbf{H}_{mk}$ and the first precoding matrix $\mathbf{P}_m$.

The coding matrix obtaining unit 22 is further configured to select, based on the first equivalent channel matrix $\mathbf{H}_{mk}\mathbf{P}_m$ obtained by the equivalent channel obtaining unit 23, a second precoding matrix $\mathbf{P}_{mk}$ for a transmit signal vector $\mathbf{X}_{mk}$.

A method for selecting, based on the first equivalent channel matrix $\mathbf{H}_{mk}\mathbf{P}_m$, the second precoding matrix $\mathbf{P}_{mk}$ is the same as a method for selecting, based on a true channel matrix $\mathbf{H}_{mk}$, a precoding matrix in the prior art. For example, an SVD (singular value decomposition, singular value decomposition) decomposition-based linear precoding method may be used.

After being coded by the pico base station by using the second precoding matrix $\mathbf{P}_{mk}$ obtained by the coding matrix obtaining unit 22, the transmit signal vector $\mathbf{X}_{mk}$ of the UE may be represented as $\mathbf{P}_m\mathbf{P}_{mk}\mathbf{x}_{mk}$. As described above, this signal may cause PT2M interference to the macro base station. However, because the first precoding matrix $\mathbf{P}_m$ is constituted by the null space vector of the first channel matrix $\mathbf{H}_m$, this signal is effectively suppressed after entering a receive end of the macro base station through a channel matrix $\mathbf{H}_m$ :

$$\mathbf{H}_m\left(\sum_{k=1}^{K}\mathbf{P}_m\mathbf{P}_{mk}\mathbf{x}_k\right) = \mathbf{H}_m\mathbf{P}_m\left(\sum_{k=1}^{K}\mathbf{P}_{mk}\mathbf{x}_k\right) = \mathbf{0} \qquad (1)$$

In addition, for UE served by the pico base station, a downlink signal received from the pico base station is:

$$\mathbf{H}_{mk}\mathbf{P}_m\mathbf{P}_{mk}\mathbf{x}_{mk} = \left(\mathbf{H}_{mk}\mathbf{P}_m\right)\cdot\mathbf{P}_{mk}\mathbf{x}_{mk} \qquad (2)$$

Because $\mathbf{P}_{mk}$ is selected according to the equivalent channel matrix $\mathbf{H}_{mk}\mathbf{P}_m$, for the UE served by the pico base station, the precoding matrix $\mathbf{P}_{mk}$ is still an optimal choice. In this way, after the foregoing operations, PT2M interference from the pico base station to the macro base station is effectively suppressed, without causing impact on downlink transmission from the pico base station to UE served by the pico base station.

Further, when the quantity $M_m$ of the transmit antennas of the pico base station is greater than the quantity N of the receive antennas of the macro base station, the coding matrix obtaining unit 22 is specifically configured to: obtain, based on the first channel matrix $\mathbf{H}_m$, the null space vector of the first channel matrix $\mathbf{H}_m$ by using a matrix factorization algorithm, and constitute the first precoding matrix $\mathbf{P}_m$ by using the null space vector of the first channel matrix $\mathbf{H}_m$.

Specifically, the coding matrix obtaining unit 22 may obtain the null space vector of the first channel matrix $\mathbf{H}_m$ by using the matrix factorization algorithm. This embodiment of the present invention provides a specific implementation manner of the matrix factorization algorithm. The coding matrix obtaining unit 22 performs SVD decomposition on the first channel matrix $\mathbf{H}_m$:

$$\mathbf{H}_m = \mathbf{U}_m\left[\boldsymbol{\Lambda}_m,\mathbf{0}\right]\begin{bmatrix}\overline{\mathbf{V}}_m^H \\ \widetilde{\mathbf{V}}_m^H\end{bmatrix} \qquad (3)$$

A null space matrix $\widetilde{\mathbf{V}}_m$ of the first channel matrix $\mathbf{H}_m$ is obtained, where $\widetilde{\mathbf{V}}_m$ is an $M_m \times r_m$ matrix, $\mathbf{A}_m$ is an $r_m \times M_m$ matrix, and $r_m \geq 1$ is a quantity of dimensions of null space of the first channel matrix $\mathbf{H}_m$. Then, the first precoding matrix $\mathbf{P}_m = \widetilde{\mathbf{V}}_m\mathbf{A}_m$ is generated. The precoding matrix $\mathbf{P}_m$ is constituted by the null space vector of the first channel matrix $\mathbf{H}_m$, and therefore:

$$\mathbf{H}_m\mathbf{P}_m = \mathbf{U}_m\left[\boldsymbol{\Lambda}_m,\mathbf{0}\right]\begin{bmatrix}\overline{\mathbf{V}}_m^H \\ \widetilde{\mathbf{V}}_m^H\end{bmatrix}\cdot\widetilde{\mathbf{V}}_m\mathbf{A}_m = \mathbf{U}_m\left[\boldsymbol{\Lambda}_m,\mathbf{0}\right]\begin{bmatrix}\mathbf{0} \\ \mathbf{I}\end{bmatrix}\mathbf{A}_m = \mathbf{0} \qquad (4)$$

When the quantity $M_m$ of the transmit antennas of the pico base station is less than or equal to the quantity N of the receive antennas of the macro base station, a quantity of equivalent receive antennas of the macro base station may be decreased from N to D by using a receiving beamforming matrix. As shown in FIG. 4, the apparatus further includes: a beamforming unit 25, configured to obtain a beamforming matrix $\mathbf{Q}$ with DxN dimensions, where N is the quantity of the receive antennas of the macro base station, and D is the quantity of the equivalent receive antennas of the macro base station. It may be understood that, for the beamforming matrix $\mathbf{Q}$, the macro base station reduces a quantity of dimensions of a received signal vector $\mathbf{y}$ with $N\times 1$ dimensions by using the beamforming matrix $\mathbf{Q}$ with $D\times N$ dimensions, to transform the received signal vector $\mathbf{y}$ into a received signal vector $\mathbf{z}$ with $D\times 1$ dimensions, that is, $\mathbf{Q_y} = \mathbf{z}$. That is, a received signal vector of N receive antennas of the macro base station is transformed into a received signal vector of D equivalent receive antennas. For example, when the macro base station has four receive antennas, the receive antennas of the macro base station are equivalent to two equivalent receive antennas by using a beamforming matrix with $2\times 4$ dimensions, so that a quantity of dimensions of a received signal vector with $4\times 1$ dimensions of the macro base station is reduced and the received signal vector is transformed into a received signal vector with $2\times 1$ dimensions. This embodiment of the present invention further provides a beamforming matrix, and $\mathbf{Q}$ may be a matrix with an element of $e^{j\theta_k}$ ($\theta_k$ is an arbitrary value), for example:

$$\mathbf{Q} = \begin{bmatrix} 1 & e^{j\frac{\pi}{2}} \\ e^{j\frac{\pi}{2}} & e^{j\pi} \\ e^{j\pi} & e^{j\frac{3\pi}{2}} \\ e^{j\frac{3\pi}{2}} & 1 \end{bmatrix} = \begin{bmatrix} 1 & j \\ j & -1 \\ -1 & -j \\ -j & 1 \end{bmatrix}$$

The equivalent channel obtaining unit 23 is further configured to obtain, according to the beamforming matrix **Q** obtained by the beamforming unit 25, a second equivalent channel matrix $\mathbf{H}'_m$ corresponding to the first channel matrix $\mathbf{H}_m$.

Specifically, it may be learned from the foregoing process that the quantity of the equivalent receive antennas of the macro base station is D, and the second equivalent channel matrix that is from the pico base station to the macro base station is $\mathbf{H}'_m = \mathbf{Q}\mathbf{H}_m$.

The coding matrix obtaining unit 22 is specifically configured to obtain, based on the second equivalent channel matrix $\mathbf{H}'_m$ obtained by the equivalent channel obtaining unit 23, the first precoding matrix $\mathbf{P}_m$, where the first precoding matrix $\mathbf{P}_m$ is represented by a null space vector of the second equivalent channel matrix $\mathbf{H}'_m$. Preferably, $\mathbf{P}_m$ and $\mathbf{H}'_m$ may be enabled to meet $\mathbf{H}'_m\mathbf{P}_m = \mathbf{0}$. Likewise, $\mathbf{P}_m$ may be obtained by using the matrix factorization algorithm.

According to the transmitting apparatus provided in this embodiment of the present invention, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a pico base station and the second base station is a macro base station, impact of PT2M interference on receiving an uplink signal from UE by the macro base station can be suppressed.

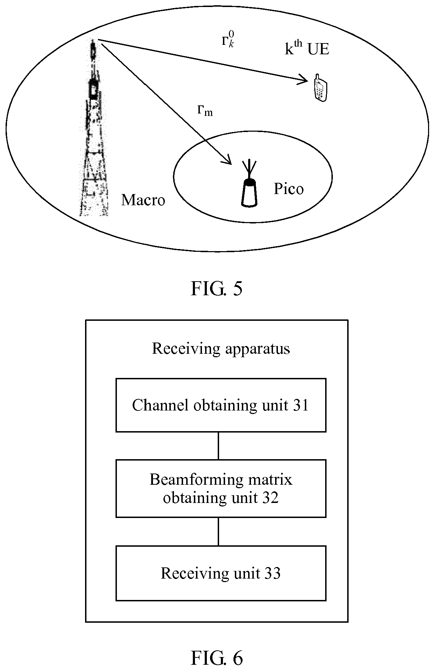

Specifically, as shown in FIG. 5, suppression of MT2P interference is used as an example for description. In FIG. 5, a channel matrix that is from a macro base station to the mth pico base station in a macro cell is $\Gamma_m$, where $m = 1,2,\cdots L$, and $\Gamma_m$ is a matrix with $N_m \times M$ dimensions; and a channel matrix that is from the macro base station to the kth UE served by the macro base station is $\Gamma_k^0$, where $k = 1,2,\cdots K$, $K$ is a quantity of users served by the macro base station, M is a quantity of transmit antennas of the macro base station, and $N_m$ is a quantity of receive antennas of the mth pico base station. Specifically, the first base station is the macro base station, the second base station is the pico base station, the transmitting apparatus is the macro base station or a control entity disposed in the macro base station, and as shown in FIG. 2, specific functions of the transmitting apparatus are described as follows:

A channel obtaining unit 21 is configured to obtain a first channel matrix $\Gamma_\Sigma = \begin{bmatrix} \Gamma_1 \\ \Gamma_2 \\ \vdots \\ \Gamma_L \end{bmatrix}$ that is from the macro base station to the pico base station, where $\Gamma_\Sigma$ is a matrix with $\sum\limits_{m=1}^{L} N_m \times M$ dimensions.

This may be obtained by using an existing channel estimation technology well known to persons skilled in the art. The first channel matrix $\Gamma_\Sigma$ may be directly obtained by the macro base station, for example, the macro base station may obtain an estimation of the channel matrix $\Gamma_m$ by using a reference symbol included in a downlink signal transmitted by each pico base station; or each pico base station may obtain an estimation of the channel matrix $\Gamma_m$ by using a reference symbol included in a downlink signal transmitted by the macro base station, and forward an estimation result to the macro base station through a backhaul channel.

The channel obtaining unit 21 is further configured to obtain a second channel matrix $\Gamma_k^0$ that is from the macro base station to user equipment UE served by the macro base station.

This may be obtained by using an existing channel estimation technology well known to persons skilled in the art. The second channel matrix $\mathbf{\Gamma}_k^0$ may be directly obtained by the macro base station, for example, the $k^{th}$ UE may obtain an estimation of the channel matrix $\mathbf{\Gamma}_k^0$ by using a reference symbol included in a downlink signal transmitted by the macro base station and report an estimation result to the macro base station. Alternatively, because reception and transmission are intra-frequency, by making use of channel reciprocity, the macro base station may directly obtain an estimation of the channel matrix $\mathbf{\Gamma}_k^0$ by using a reference symbol included in an uplink signal transmitted by the $k^{th}$ UE.

A coding matrix obtaining unit 22 is configured to obtain, based on the first channel matrix $\Gamma_\Sigma$ obtained by the channel obtaining unit 21, a first precoding matrix $\mathbf{P}_0$, where the first precoding matrix $\mathbf{P}_0$ is constituted by a null space vector of the first channel matrix $\Gamma_\Sigma$, and therefore, $\Gamma_\Sigma \mathbf{P}_0 = \mathbf{0}$, that is, $\Gamma_m \mathbf{P}_0 = \mathbf{0}$, where $m = 1,2,\cdots L$.

An equivalent channel obtaining unit 23 is configured to obtain a first equivalent channel matrix $\mathbf{\Gamma}_k^0 \mathbf{P}_0$ that is from the macro base station to the user equipment served by the macro base station, where the first equivalent channel matrix $\mathbf{\Gamma}_k^0 \mathbf{P}_0$ is a product of the second channel matrix $\mathbf{\Gamma}_k^0$ and the first precoding matrix $\mathbf{P}_0$.

The coding matrix obtaining unit 22 is further configured to select, based on the first equivalent channel matrix $\mathbf{\Gamma}_k^0 \mathbf{P}_0$ obtained by the equivalent channel obtaining unit 23, a second precoding matrix $\mathbf{P}_k^0$ for a transmit signal $\mathbf{x}_k^0$.

A method for selecting, based on the first equivalent channel matrix $\mathbf{\Gamma}_k^0 \mathbf{P}_0$, the second precoding matrix $\mathbf{P}_k^0$ is the same as a method for selecting, based on a true channel matrix $\mathbf{\Gamma}_k^0$, a precoding matrix in the prior art. For example, an SVD decomposition-based linear precoding method may be used.

After being coded by the macro base station by using the second precoding matrix $\mathbf{P}_k^0$ obtained by the coding matrix obtaining unit 22, the transmit signal $\mathbf{x}_k^0$ of the UE may be represented as $\mathbf{P}_0 \mathbf{P}_k^0 \mathbf{x}_k^0$. As described above, this signal is MT2P interference for the pico base station. However, because the first precoding matrix $\mathbf{P}_0$ is constituted by the null space vector of the first channel matrix $\Gamma_\Sigma$, this signal is effectively suppressed after entering a receive end of the pico base station through a channel matrix $\Gamma_m$:

$$\mathbf{\Gamma}_m\left(\mathbf{P}_0 \mathbf{P}_k^0 \mathbf{x}_k^0\right) = \mathbf{\Gamma}_m \mathbf{P}_0\left(\mathbf{P}_k^0 \mathbf{x}_k^0\right) = \mathbf{0} \qquad (5)$$

In addition, for the $k^{th}$ UE served by the macro base station, a downlink signal received from the pico base station is:

$$\mathbf{\Gamma}_k^0 \mathbf{P}_0 \mathbf{P}_k^0 \mathbf{x}_k^0 = \left(\mathbf{\Gamma}_k^0 \mathbf{P}_0\right)\mathbf{P}_k^0 \mathbf{x}_k^0 \qquad (6)$$

Because $\mathbf{P}_k^0$ is selected according to the equivalent channel matrix $\mathbf{\Gamma}_k^0 \mathbf{P}_0$, for the $k^{th}$ UE served by the macro base station, the precoding matrix $\mathbf{P}_k^0$ is still an optimal choice. In this way, after the foregoing operations, MT2P interference from the macro base station to the pico base station is effectively suppressed, without causing impact on downlink transmission from the macro base station to UE served by the macro base station.

Further, when the quantity M of the transmit antennas of the macro base station is greater than a total quantity of receive antennas of all pico base stations that communicate with the macro base station, the coding matrix obtaining unit 22 is specifically configured to: obtain, based on the first channel matrix $\Gamma_\Sigma$, the null space vector of the first channel matrix $\Gamma_\Sigma$, and constitute the first precoding matrix $\mathbf{P}_0$ by using the null space vector of the first channel matrix $\Gamma_\Sigma$.

Specifically, the coding matrix obtaining unit 22 may obtain the null space vector of the first channel matrix $\Gamma_\Sigma$ by using a matrix factorization algorithm. This embodiment of the present invention provides a specific implementation manner of the matrix factorization algorithm. The coding matrix obtaining unit 22 performs SVD (singular value decomposition, singular value decomposition) decomposition on the first channel matrix $\Gamma_\Sigma$ to obtain a matrix $\tilde{\mathbf{V}}_\Sigma$ constituted by the null space vector of $\Gamma_\Sigma$ and then obtain the precoding matrix $\mathbf{P}_0 = \tilde{\mathbf{V}}_\Sigma \mathbf{A}_0$, where $\tilde{\mathbf{V}}_\Sigma$ is an $M \times r$ matrix, $\mathbf{A}_0$ is an $r \times M$ matrix, and $r \geq 1$ is a quantity of dimensions of null space of $\Gamma_\Sigma$. The precoding matrix $\mathbf{P}_0$ is constituted by the null space vector of $\Gamma_\Sigma$, and therefore, $\Gamma_\Sigma \mathbf{P}_0 = \mathbf{0}$.

Optionally, when the quantity M of the transmit antennas of the macro base station is less than or equal to a total quantity of receive antennas of all pico base stations that communicate with the macro base station,

as shown in FIG. 4, the apparatus further includes: a beamforming unit 25, configured to obtain a beamforming matrix $\mathbf{Q}_m(m=1,2,\cdots L)$ with $J_m \times N_m$ dimensions, where $m=1,2,\cdots L$, and L is a total quantity of pico base stations corresponding to small cells in the macro cell. It may be understood that, for the beamforming matrix $\mathbf{Q}_m$, the $m^{th}$ pico base station reduces a quantity of dimensions of a received signal vector $y_m$ with $N_m \times 1$ dimensions by using the receiving beamforming matrix $\mathbf{Q}_m$ with $J_m \times N_m$ dimensions, to transform the received signal vector $\mathbf{y}_m$ into a received signal vector $\mathbf{z}_m$ with $J_m \times 1$ dimensions, that is, $\mathbf{Q}_m \mathbf{y}_m = \mathbf{z}_m$. That is, a received signal vector of $N_m$ receive antennas of the pico base station is transformed into a received signal vector of $J_m$ equivalent receive antennas.

The equivalent channel obtaining unit 23 is further configured to obtain, according to the beamforming matrix $\mathbf{Q}_m(m=1,2,\cdots L)$ obtained by the beamforming unit 25, a second equivalent channel matrix $\mathbf{\Gamma}'_\Sigma$ corresponding to the first

$$\mathbf{\Gamma}'_\Sigma = \begin{bmatrix} \mathbf{Q}_1 \mathbf{\Gamma}_1 \\ \mathbf{Q}_2 \mathbf{\Gamma}_2 \\ \vdots \\ \mathbf{Q}_L \mathbf{\Gamma}_L \end{bmatrix}.$$

channel matrix $\Gamma_\Sigma$, where

Specifically, in the foregoing process, a total quantity of equivalent receive an-tennas of the pico base station is $\sum_{m=1}^{L} J_m$, and an appropriate $J_m$ is selected to meet a condi-tion $M > \sum_{m=1}^{L} J_m$.

The coding matrix obtaining unit 22 is specifically configured to obtain, based on the second equivalent channel matrix $\mathbf{\Gamma}'_\Sigma$ obtained by the equivalent channel obtaining unit 23, the first precoding matrix $\mathbf{P}_0$, where the first precoding matrix $\mathbf{P}_0$ is constituted by a null space vector of the second equivalent channel matrix $\mathbf{\Gamma}'_\Sigma$, and therefore, $\mathbf{\Gamma}'_\Sigma \mathbf{P}_0 = \mathbf{0}$.

In addition, this embodiment of the present invention further provides a beamforming matrix, and $\mathbf{Q}_m$ may be a matrix with an element of $e^{j\theta k}$ ($\theta_k$ is an arbitrary value), for example:

$$\mathbf{Q}_m = \begin{bmatrix} 1 & e^{j\frac{\pi}{2}} \\ e^{j\frac{\pi}{2}} & e^{j\pi} \\ e^{j\pi} & e^{j\frac{3\pi}{2}} \\ e^{j\frac{3\pi}{2}} & 1 \end{bmatrix} = \begin{bmatrix} 1 & j \\ j & -1 \\ -1 & -j \\ -j & 1 \end{bmatrix}$$

According to the transmitting apparatus provided in this embodiment of the present invention, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a macro base station and the second base station is a pico base station, impact of MT2P interference on receiving an uplink signal from UE by the pico base station can be suppressed.

As shown in FIG. 6, an embodiment of the present invention provides a receiving apparatus that is used in the foregoing wireless communications system formed by the HetNet network, where in the wireless communications system, a macro cell corresponding to a macro base station includes a small cell corresponding to a pico base station. A specific receiving apparatus may be disposed in or be a macro base station Macro. The receiving apparatus includes:

a channel obtaining unit 31, configured to obtain a first channel matrix that is from the pico base station to the macro base station;

a beamforming matrix obtaining unit 32, configured to obtain, based on the first channel matrix obtained by the channel obtaining unit 31, a first beamforming matrix, where the first beamforming matrix is represented by a null space vector of the first channel matrix; and

a receiving unit 33, configured to receive, by using the first beamforming matrix obtained by the beamforming matrix obtaining unit 32, a signal sent by user equipment served by the macro base station.

According to the receiving apparatus provided in this embodiment of the present invention, a first channel matrix that is from a pico base station to a macro base station can be obtained, a first beamforming matrix is represented by a null space vector of the first channel matrix, and a signal sent by user equipment served by the macro base station is received by using the first beamforming matrix and by using a second channel matrix. Because the first beamforming matrix is constituted by the null space vector of the first channel matrix, a product of the first channel matrix and the first beamforming matrix is zero or approximately zero. Therefore, impact of PT2M interference on receiving an uplink signal from UE by the macro base station can be suppressed.

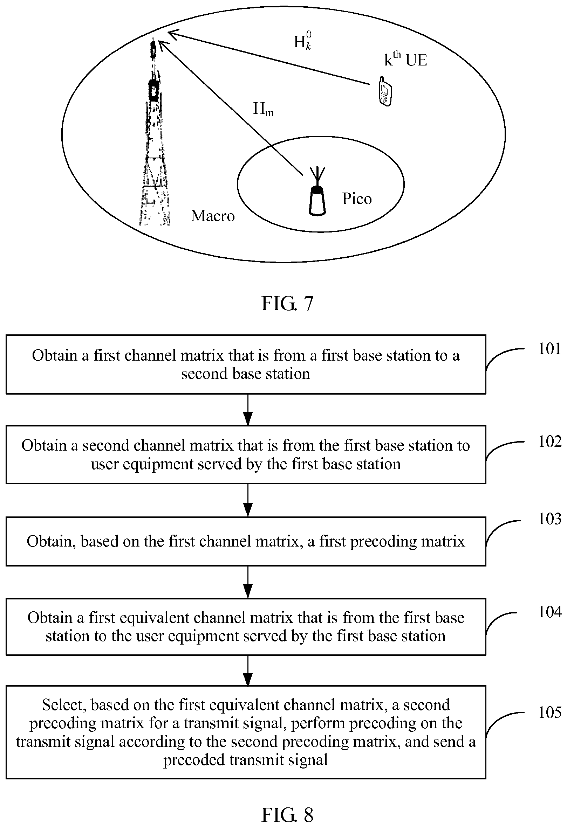

Specifically, as shown in FIG. 7, suppression of PT2M interference is used as an example for description. In FIG. 7, a channel matrix that is from the $m^{th}$ pico base station in a macro cell to a macro base station is $\mathbf{H}_m$, where $m=1,2,\cdots L$; and a channel matrix that is from the $k^{th}$ UE served by the macro base station to the macro base station is $\mathbf{H}_k^0$, where $k=1,2,\cdots K$, and $K$ is a quantity of user equipments served by the macro base station. A specific receiving apparatus is the macro base station or a control entity disposed in the macro base station, and referring to FIG. 6, specific functions of the receiving apparatus are described as follows:

$$\mathbf{H}_\Sigma = \begin{bmatrix} \mathbf{H}_1 \\ \mathbf{H}_2 \\ \vdots \\ \mathbf{H}_L \end{bmatrix}$$

A channel obtaining unit 31 is configured to obtain a first channel matrix that is from the pico base station to the macro base station, where $\mathbf{H}_\Sigma$ is a ma-trix with $N \times \sum\limits_{m=1}^{L} M_m$ dimensions.

For a specific method for obtaining $\mathbf{H}_m(m=1,2,\cdots L)$, refer to the foregoing embodiments, and details are not described herein.

A beamforming matrix obtaining unit 32 is configured to obtain, based on the first channel matrix $\mathbf{H}_\Sigma$ obtained by the channel obtaining unit 31, a first beamforming matrix $\mathbf{G}_0$, where the first beamforming matrix $\mathbf{G}_0$ is represented by a null space vector of the first channel matrix $\mathbf{H}_\Sigma$, and therefore, $\mathbf{G}_0\mathbf{H}_\Sigma=\mathbf{0}$.

A receiving unit 33 is configured to receive, by using the first beamforming matrix $\mathbf{G}_0$ obtained by the beamforming matrix obtaining unit 32, a signal sent by user equipment served by the macro base station.

The beamforming matrix obtaining unit 32 is specifically configured to: obtain, based on the first channel matrix $\mathbf{H}_\Sigma$, the null space vector of the first channel matrix $\mathbf{H}_\Sigma$, and constitute the first beamforming matrix $\mathbf{G}_0$ by using the null space vector of the first channel matrix.

Specifically, the beamforming matrix obtaining unit 32 obtains the null space vector of the first channel matrix $\mathbf{H}_\Sigma$ by using a matrix factorization algorithm. This embodiment of the present invention provides a specific implementation manner of the matrix factorization algorithm.

The beamforming matrix obtaining unit 32 performs SVD (singular value decomposition, singular value decomposition) decomposition on the first channel matrix $\mathbf{H}_\Sigma$ to obtain:

$$\mathbf{H}_\Sigma = \begin{bmatrix} \overline{\mathbf{U}}_\Sigma & \widetilde{\mathbf{U}}_\Sigma \end{bmatrix} \begin{bmatrix} \mathbf{\Lambda}_\Sigma \\ \mathbf{0} \end{bmatrix} \mathbf{V}_m^H$$

$$N' = N - \sum_{m=1}^{L} M_m$$

where $\widetilde{\mathbf{U}}_\Sigma$ is a matrix constituted by a null space vector of a matrix $\mathbf{H}_\Sigma$ with $N \times N'$ dimensions, and

and is greater than a quantity of uplink spatial flows received by the macro base station. Therefore, a receiving beam-forming matrix $\mathbf{G}_0 = \mathbf{B}_0 \widetilde{\mathbf{U}}_\Sigma^H$ of the macro base station is obtained, where $\mathbf{G}_0$ is a matrix with $N' \times N$ dimensions, and $\mathbf{B}_0$ is an $N' \times N'$ matrix, and

$$\mathbf{G}_0 \mathbf{H}_\Sigma = \mathbf{B}_0 \widetilde{\mathbf{U}}_\Sigma^H \cdot \begin{bmatrix} \overline{\mathbf{U}}_\Sigma & \widetilde{\mathbf{U}}_\Sigma \end{bmatrix} \begin{bmatrix} \mathbf{\Lambda}_\Sigma \\ \mathbf{0} \end{bmatrix} \mathbf{V}_m^H = \mathbf{B}_0 \begin{bmatrix} \mathbf{0} & \mathbf{I} \end{bmatrix} \begin{bmatrix} \mathbf{\Lambda}_\Sigma \\ \mathbf{0} \end{bmatrix} \mathbf{V}_m^H = \mathbf{0}$$

Therefore, the receiving beamforming matrix $\mathbf{G}_0 = \mathbf{B}_0 \widetilde{\mathbf{U}}_\Sigma^H$ meets a condition $\mathbf{G}_0 \mathbf{H}_\Sigma = \mathbf{0}$.

It may be learned from the foregoing embodiment that this embodiment of the present invention may be implemented only when $N' = N - \sum_{m=1}^{L} M_m$ is met and greater than the quantity of the uplink spatial flows received by the macro base station, that is, the null space vector can be obtained after SVD decomposition is performed on the first channel matrix $\mathbf{H}_\Sigma$. Therefore, this embodiment of the present invention is preferably applied in a communication scenario in which a quantity of receive antennas of a macro base station is greater than a total quantity of transmit antennas of all pico base stations that communicate with the macro base station. When a quantity of receive antennas of a macro base station is less than or equal to a total quantity of transmit antennas of all pico base stations that communicate with the macro base station, the foregoing method may be used to suppress PT2M interference generated by a pico base station that has a relatively small path loss between the pico base station and the macro base station in this embodiment of the present invention. For example, only PT2M interference of central small cells near the macro base station is suppressed, and in this case, a quantity of pico base stations is reduced to meet the condition that $N' = N - \sum_{m=1}^{L} M_m$ and is greater than the quantity of the uplink spatial flows received by the macro base station.

An embodiment of the present invention provides a method for obtaining a precoding matrix for a transmit signal. As shown in FIG. 8, the method includes:

101. Obtain a first channel matrix that is from a first base station to a second base station.
102. Obtain a second channel matrix that is from the first base station to user equipment served by the first base station.
103. Obtain, based on the first channel matrix, a first precoding matrix, where the first precoding matrix is constituted by a null space vector of the first channel matrix.
104. Obtain a first equivalent channel matrix that is from the first base station to the user equipment served by the first base station, where the first equivalent channel matrix is a product of the second channel matrix and the first precoding matrix.
105. Select, based on the first equivalent channel matrix, a second precoding matrix for a transmit signal, perform precoding on the transmit signal according to the second precoding matrix, and send a precoded transmit signal.

Further, optionally, the first base station is a pico base station, the second base station is a macro base station, and a macro cell corresponding to the macro base station includes a small cell corresponding to the pico base station.

When a quantity of transmit antennas of the first base station is greater than a quantity of receive antennas of the second base station, in step 103, the obtaining, based on the first channel matrix, a first precoding matrix, where the first precoding matrix is constituted by a null space vector of the first channel matrix includes:

obtaining, based on the first channel matrix, the null space vector of the first channel matrix, and constituting the first precoding matrix by using the null space vector of the first channel matrix.

Optionally, the first base station is a pico base station, the second base station is a macro base station, and a macro cell corresponding to the macro base station includes a small cell corresponding to the pico base station. When a quantity of transmit antennas of the first base station is less than or equal to a quantity of receive antennas of the second base station,

before step 104, the method further includes:

obtaining a beamforming matrix with DxN dimensions, where N is the quantity of the receive antennas of the second base station, and D is a quantity of equivalent receive antennas of the second base station; and

obtaining, according to the beamforming matrix, a second equivalent channel matrix corresponding to the first channel matrix; and

in step 104, the obtaining, based on the first channel matrix, a first precoding matrix, where the first precoding matrix is constituted by a null space vector of the first channel matrix specifically includes:

obtaining, based on the second equivalent channel matrix, the first precoding matrix, where the first precoding matrix is constituted by a null space vector of the second equivalent channel matrix.

Further, optionally, the first base station is a macro base station, the second base station is a pico base station, and a macro cell corresponding to the macro base station includes a small cell corresponding to the pico base station.

When a quantity of transmit antennas of the first base station is greater than a total quantity of receive antennas of all second base stations that communicate with the first base station,

in step 103, the obtaining, based on the first channel matrix, a first precoding matrix, where the first precoding matrix is constituted by a null space vector of the first channel matrix includes:

obtaining, based on the first channel matrix, the null space vector of the first channel matrix, and constituting the first precoding matrix by using the null space vector of the first channel matrix.

Optionally, the first base station is a macro base station, the second base station is a pico base station, and a macro cell corresponding to the macro base station includes a small cell corresponding to the pico base station.

When a quantity of transmit antennas of the first base station is less than or equal to a total quantity of receive antennas of all second base stations that communicate with the first base station,

before step 104, the method further includes:

obtaining a beamforming matrix with $J_m \times N_m$ dimensions, where $N_m$ is a quantity of receive antennas of the $m^{th}$ second base station that communicates with the first base station, $J_m$ is a quantity of equivalent receive antennas of the $m^{th}$ second base station that communicates with the first base station, $m=1,2,\cdots L$, and L is a total quantity of pico base stations corresponding to small cells in the macro cell; and

obtaining, according to the beamforming matrix, a second equivalent channel matrix corresponding to the first channel matrix; and

in step 104, the obtaining, based on the first channel matrix, a first precoding matrix, where the first precoding matrix is constituted by a null space vector of the first channel matrix specifically includes:

obtaining, based on the second equivalent channel matrix, the first precoding matrix, where the first precoding matrix is constituted by a null space vector of the second equivalent channel matrix.

According to the wireless communication method provided above, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a pico base station and the second base station is a macro base station, impact of PT2M interference on receiving an uplink signal from UE by the macro base station can be suppressed; when the first base station is a macro base station and the second base station is a pico base station, impact of MT2P interference on receiving an uplink signal from UE by the pico base station can be suppressed.

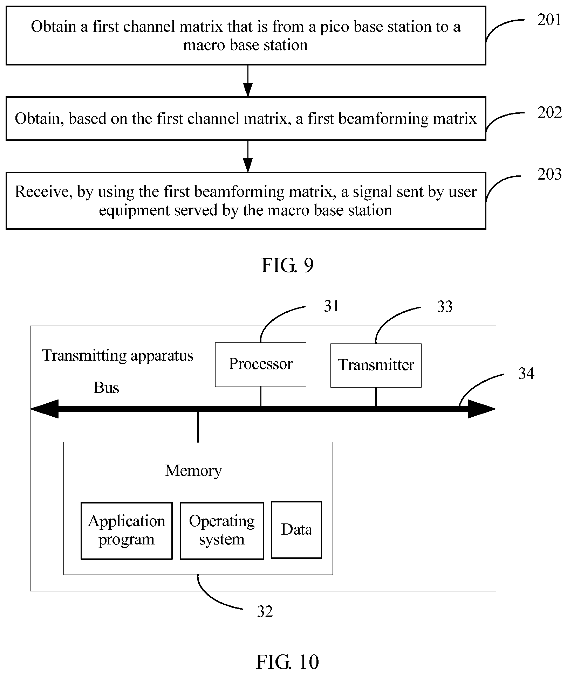

An embodiment of the present invention provides a wireless communication method, where in a wireless communications system, a macro cell corresponding to a macro base station includes a small cell corresponding to a pico base station. As shown in FIG. 9, the method includes:

201. Obtain a first channel matrix that is from the pico base station to the macro base station.

202. Obtain, based on the first channel matrix, a first beamforming matrix, where the first beamforming matrix is constituted by a null space vector of the first channel matrix.
203. Receive, by using the first beamforming matrix, a signal sent by user equipment served by the macro base station.

Further, in step 203, the obtaining, based on the first channel matrix, a first beamforming matrix, where the first beamforming matrix is constituted by a null space vector of the first channel matrix specifically includes:

obtaining, based on the first channel matrix, the null space vector of the first channel matrix; and constituting the first beamforming matrix by using the null space vector of the first channel matrix.

According to the wireless communication method provided in this embodiment of the present invention, a first channel matrix that is from a pico base station to a macro base station can be obtained, a first beamforming matrix is represented by a null space vector of the first channel matrix, and a signal sent by user equipment served by the first base station is received by using the first beamforming matrix and by using a second channel matrix. Because the first beamforming matrix is constituted by the null space vector of the first channel matrix, a product of the first channel matrix and the first beamforming matrix is zero or approximately zero. Therefore, impact of PT2M interference on receiving an uplink signal from UE by the macro base station can be suppressed.

An embodiment of the present invention provides a transmitting apparatus. As shown in FIG. 10, the apparatus includes: a processor 31, a memory 32, a transmitter 33, and a bus 34. The bus 34 connects the processor 31, the memory 32, and the transmitter 33 for data transmission, and the memory 32 is configured to store data processed by the processor 31.

The bus 34 may be an industry standard architecture (Industry Standard Architecture, ISA for short) bus, a Peripheral Component Interconnect (Peripheral Component, PCI for short) bus, an extended industry standard architecture (Extended Industry Standard Architecture, EISA for short) bus, or the like, and no limitation is imposed herein. The bus 34 may be classified into an address bus, a data bus, a control bus, and the like. For ease of representation, in FIG. 10, the bus 34 is represented by only one bold line, but this does not mean that there is only one bus or one type of bus.

The memory 32 is configured to store data or executable program code, where the program code includes a computer operation instruction, and may be specifically an operating system, an application program, or the like. The memory 32 may include a high-speed RAM memory, and may also include a non-volatile memory (non-volatile memory), for example, at least one magnetic disk memory.

The processor 31 may be a central processing unit (Central Processing Unit, CPU for short), or an application-specific integrated circuit (Application Specific Integrated Circuit, ASIC for short), or may be configured as one or more integrated circuits implementing this embodiment of the present invention.

The processor 31 is configured to implement, by executing the program code in the memory 32, the method for obtaining a precoding matrix for a transmit signal in the foregoing embodiments.

The processor 31 is configured to: obtain a first channel matrix that is from a first base station to a second base station; obtain a second channel matrix that is from the first base station to user equipment served by the first base station; obtain, based on the first channel matrix, a first precoding matrix, where the first precoding matrix is constituted by a null space vector of the first channel matrix; obtain a first equivalent channel matrix that is from the first base station to the user equipment served by the first base station, where the first equivalent channel matrix is a product of the second channel matrix and the first precoding matrix; and select, based on the first equivalent channel matrix obtained by the processor 31, a second precoding matrix for a transmit signal.

The transmitter 33 is configured to: perform precoding on the transmit signal according to the second precoding matrix obtained by the processor 31, and send a precoded transmit signal.

Further, optionally, the first base station is a pico base station, the second base station is a macro base station, and a macro cell corresponding to the macro base station includes a small cell corresponding to the pico base station.

When a quantity of transmit antennas of the first base station is greater than a quantity of receive antennas of the second base station, the processor 31 is specifically configured to: obtain, based on the first channel matrix, the null space vector of the first channel matrix, and constitute the first precoding matrix by using the null space vector of the first channel matrix.

Optionally, the first base station is a pico base station, the second base station is a macro base station, and a macro cell corresponding to the macro base station includes a small cell corresponding to the pico base station.

When a quantity of transmit antennas of the first base station is less than or equal to a quantity of receive antennas of the second base station,
the processor 31 is further configured to: obtain a beamforming matrix with DxN dimensions, where N is the quantity of the receive antennas of the second base station, and D is a quantity of equivalent receive antennas of the second base station; and obtain, according to the beamforming matrix, a second equivalent channel matrix corresponding to the first channel matrix; and

the processor 31 is specifically configured to obtain, based on the second equivalent channel matrix, the first precoding matrix, where the first precoding matrix is constituted by a null space vector of the second equivalent channel matrix.

Further, optionally, the first base station is a macro base station, the second base station is a pico base station, and a macro cell corresponding to the macro base station includes a small cell corresponding to the pico base station.

When a quantity of transmit antennas of the first base station is greater than a total quantity of receive antennas of all second base stations in the wireless communications system that communicate with the first base station,

the processor 31 is specifically configured to: obtain, based on the first channel matrix, the null space vector of the first channel matrix, and constitute the first precoding matrix by using the null space vector of the first channel matrix.

Optionally, the first base station is a macro base station, the second base station is a pico base station, and a macro cell corresponding to the macro base station includes a small cell corresponding to the pico base station. When a quantity of transmit antennas of the first base station is less than or equal to a total quantity of receive antennas of the second base station,

the processor 31 is further configured to: obtain a beamforming matrix with $J_m \times N_m$ dimensions, where $N_m$ is a quantity of receive antennas of the $m^{th}$ second base station that communicates with the first base station, $J_m$ is a quantity of equivalent receive antennas of the $m^{th}$ second base station that communicates with the first base station, $m=1,2,\cdots L$, and L is a total quantity of pico base stations in the macro cell; and obtain, according to the beamforming matrix, a second equivalent channel matrix corresponding to the first channel matrix; and

the processor 31 is specifically configured to obtain, based on the second equivalent channel matrix, the first precoding matrix, where the first precoding matrix is constituted by a null space vector of the second equivalent channel matrix.

According to the transmitting apparatus provided in this embodiment of the present invention, a first channel matrix that is from a first base station to a second base station can be obtained; a first precoding matrix is represented by a null space vector of the first channel matrix; a product of a second channel matrix that is from the first base station to user equipment served by the first base station and the first precoding matrix is used as a first equivalent channel matrix that is from the first base station to the user equipment served by the first base station; and then, based on the first equivalent channel matrix, a second precoding matrix is selected for a transmit signal vector. Because the first precoding matrix is constituted by the null space vector of the first channel matrix, a product of the first channel matrix and the first precoding matrix is zero or approximately zero. Therefore, when the first base station is a pico base station and the second base station is a macro base station, impact of PT2M interference on receiving an uplink signal from UE by the macro base station can be suppressed; when the first base station is a macro base station and the second base station is a pico base station, impact of MT2P interference on receiving an uplink signal from UE by the pico base station can be suppressed.

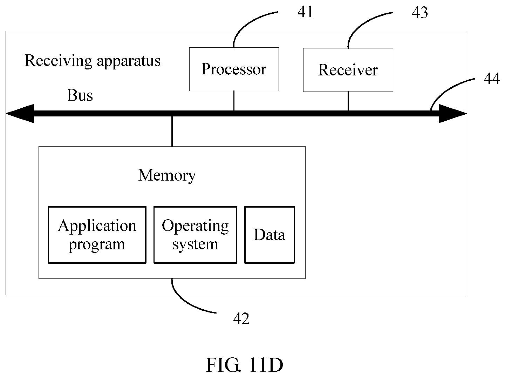

An embodiment of the present invention provides a receiving apparatus that is used in a wireless communications system, where in the wireless communications system, a macro cell corresponding to a macro base station includes a small cell corresponding to a pico base station. As shown in FIG. 11, the apparatus includes: a processor 41, a memory 42, a receiver 43, and a bus 44. The bus 44 connects the processor 41, the memory 42, and the receiver 43 for data transmission, and the memory 42 is configured to store data processed by the processor.

The bus 44 may be an industry standard architecture (Industry Standard Architecture, ISA for short) bus, a Peripheral Component Interconnect (Peripheral Component, PCI for short) bus, an extended industry standard architecture (Extended Industry Standard Architecture, EISA for short) bus, or the like, and no limitation is imposed herein. The bus 44 may be classified into an address bus, a data bus, a control bus, and the like. For ease of representation, in FIG. 11, the bus 44 is represented by only one bold line, but this does not mean that there is only one bus or one type of bus.

The memory 42 is configured to store data or executable program code, where the program code includes a computer operation instruction, and may be specifically an operating system, an application program, or the like. The memory 42 may include a high-speed RAM memory, and may also include a non-volatile memory (non-volatile memory), for example, at least one magnetic disk memory.

The processor 41 may be a central processing unit (Central Processing Unit, CPU for short), or an application-specific integrated circuit (Application Specific Integrated Circuit, ASIC for short), or may be configured as one or more integrated circuits implementing this embodiment of the present invention.

The processor 41 is configured to implement, by executing the program code in the memory 42, the method for obtaining a precoding matrix for a transmit signal in the foregoing embodiments.

The processor 41 is configured to: obtain a first channel matrix that is from the pico base station to the macro base station, and obtain, based on the first channel matrix, a first beamforming matrix, where the first beamforming matrix is constituted by a null space vector of the first channel matrix.

The receiver 43 is configured to receive, by using the first beamforming matrix obtained by the processor 41, a signal sent by user equipment served by the macro base station.

Further, the processor 41 is specifically configured to obtain, based on the first channel matrix, the null space vector of the first channel matrix, and constitute the first beamforming matrix by using the null space vector of the first channel matrix.

According to the receiving apparatus provided in this embodiment of the present invention, a first channel matrix that is from a pico base station to a macro base station can be obtained, a first beamforming matrix is represented by a null space vector of the first channel matrix, and a signal sent by user equipment served by the macro base station is received by using the first beamforming matrix and by using a second channel matrix. Because the first beamforming matrix is constituted by the null space vector of the first channel matrix, a product of the first channel matrix and the first beamforming matrix is zero or approximately zero. Therefore, impact of PT2M interference on receiving an uplink signal from UE by the macro base station can be suppressed.

**Claims**

1. A wireless communication method, comprising:

    1.1 obtaining (101) a first channel matrix (21) that is from a first base station (P1, Macro) to a second base station (P2, Macro);
    1.2 obtaining (102) a second channel matrix (21) that is from the first base station to user equipment (UE1-UE2) served by the first base station;
    1.3 obtaining (103), based on the first channel matrix, a first precoding matrix, wherein the first precoding matrix is constituted by a null space vector of the first channel matrix; and **characterised by**:

        1.4 obtaining (104) a first equivalent channel matrix that is from the first base station to the user equipment served by the first base station, wherein the first equivalent channel matrix is a product of the second channel matrix and the first precoding matrix; and
        1.5 selecting (105), based on the first equivalent channel matrix, a second precoding matrix for a transmit signal, performing precoding on the transmit signal according to the second precoding matrix, and sending a precoded transmit signal, wherein precoding takes place at the first base station and the precoded transmit signal is sent to the user equipment served by the first base station;

    2.1 wherein when the first base station is a pico base station, the second base station is a macro base station (Macro), and a macro cell corresponding to the macro base station comprises a small cell corresponding to the pico base station; and
    2.2 when a quantity of transmit antennas of the first base station is greater than a quantity of receive antennas of the second base station, the obtaining, based on the first channel matrix, of the first precoding matrix, wherein the first precoding matrix is constituted by a null space vector of the first channel matrix, comprises:

        2.3 obtaining, based on the first channel matrix, the null space vector of the first channel matrix; and
        2.4 constituting the first precoding matrix by using the null space vector of the first channel matrix; and

    3.1 wherein when the first base station is a pico base station, the second base station is a macro base station, and a macro cell corresponding to the macro base station comprises a small cell corresponding to the pico base station; and
    3.2 when a quantity of transmit antennas of the first base station is less than or equal to a quantity of receive antennas of the second base station, the method further comprises:

        3.3 obtaining (202) a beamforming matrix with DxN dimensions, wherein N is the quantity of the receive antennas of the second base station, and D is a quantity of equivalent receive antennas of the second base station; and
        3.4 obtaining (23), according to the beamforming matrix, a second equivalent channel matrix corresponding to the first channel matrix; and wherein

    3.5 the obtaining, based on the first channel matrix, of the first precoding matrix, wherein the first precoding matrix is constituted by a null space vector of the first channel matrix, comprises:

        3.6 obtaining, based on the second equivalent channel matrix, the first precoding matrix, wherein the first precoding matrix is constituted by a null space vector of the second equivalent channel matrix; and
        4.1 wherein when the first base station is a macro base station, the second base station is a pico base station (P2), and a macro cell corresponding to the macro base station comprises a small cell corresponding to the pico base station; and

4.2 when a quantity of transmit antennas of the first base station is greater than a total quantity of receive antennas of all second base stations that communicate with the first base station,
4.3 the obtaining, based on the first channel matrix, of the first precoding matrix, wherein the first precoding matrix is constituted by a null space vector of the first channel matrix comprises:

4.4 obtaining, based on the first channel matrix, the null space vector of the first channel matrix; and
4.5 constituting the first precoding matrix by using the null space vector of the first channel matrix; and

5.1 wherein when the first base station is a macro base station, the second base station is a pico base station, and a macro cell corresponding to the macro base station comprises a small cell corresponding to the pico base station; and
5.2 when a quantity of transmit antennas of the first base station is less than or equal to a total quantity of receive antennas of all second base stations that communicate with the first base station, the method further comprises:

5.3 obtaining a beamforming matrix with $J_m \times N_m$ dimensions, wherein $N_m$ is a quantity of receive antennas of the $m^{th}$ second base station that communicates with the first base station, $J_m$ is a quantity of equivalent receive antennas of the $m^{th}$ second base station that communicates with the first base station, $m=1,2,\cdots L$, and L is a total quantity of pico base stations corresponding to small cells in the macro cell; and
5.4 obtaining, according to the beamforming matrix, a second equivalent channel matrix corresponding to the first channel matrix; and

5.5 the obtaining, based on the first channel matrix, of the first precoding matrix, wherein the first precoding matrix is constituted by a null space vector of the first channel matrix comprises:
5.6 obtaining, based on the second equivalent channel matrix, the first precoding matrix, wherein the first precoding matrix is constituted by a null space vector of the second equivalent channel matrix.

2. A transmitting apparatus (31-34), comprising:

a) a channel obtaining unit (21), configured to obtain a first channel matrix that is from a first base station (P1, Macro) to a second base station (P2, Macro), wherein
b) the channel obtaining unit is further configured to obtain a second channel matrix that is from the first base station to user equipment served by the first base station;
c) a coding matrix obtaining unit (22), configured to obtain, based on the first channel matrix obtained by the channel obtaining unit, a first precoding matrix, wherein the first precoding matrix is constituted by a null space vector of the first channel matrix; and **characterised by**:
d) an equivalent channel obtaining unit (23), configured to obtain a first equivalent channel matrix that is from the first base station to the user equipment served by the first base station, wherein the first equivalent channel matrix is a product of the second channel matrix and the first precoding matrix, and
e) the coding matrix obtaining unit (22) is further configured to select, based on the first equivalent channel matrix obtained by the equivalent channel obtaining unit, a second precoding matrix for a transmit signal; and
f) a transmitting unit (24), configured to: perform precoding on the transmit signal according to the second precoding matrix obtained by the coding matrix obtaining unit, and send a precoded transmit signal, wherein precoding takes place at the first base station and the precoded transmit signal is sent to the user equipment served by the first base station; and
g1) wherein when the first base station is a pico base station (P1, P2), the second base station is a macro base station (Macro), and a macro cell corresponding to the macro base station comprises a small cell corresponding to the pico base station; and
g2) when a quantity of transmit antennas of the first base station is greater than a quantity of receive antennas of the second base station, the coding matrix obtaining unit is specifically configured to: obtain, based on the first channel matrix, the null space vector of the first channel matrix, and constitute the first precoding matrix by using the null space vector of the first channel matrix; and
h1) wherein when the first base station is a pico base station, the second base station is a macro base station, and a macro cell corresponding to the macro base station comprises a small cell corresponding to the pico base station; and

h2) when a quantity of transmit antennas of the first base station is less than or equal to a quantity of receive antennas of the second base station,

h3) the apparatus further comprises a beamforming unit (25), configured to obtain a beamforming matrix with DxN dimensions, wherein N is the quantity of the receive antennas of the second base station, and D is a quantity of equivalent receive antennas of the second base station;

h4) the equivalent channel obtaining unit (23) is further configured to obtain, according to the beamforming matrix obtained by the beamforming unit, a second equivalent channel matrix corresponding to the first channel matrix; and

h5) the coding matrix obtaining unit (22) is specifically configured to obtain, based on the second equivalent channel matrix obtained by the equivalent channel obtaining unit, the first precoding matrix, wherein the first precoding matrix is constituted by a null space vector of the second equivalent channel matrix; and

i1) wherein when the first base station is a macro base station, the second base station is a pico base station, and a macro cell corresponding to the macro base station comprises a small cell corresponding to the pico base station;

i2) when a quantity of transmit antennas of the first base station is greater than a total quantity of receive antennas of all second base stations that communicate with the first base station, and

i3) the coding matrix obtaining unit is specifically configured to: obtain, based on the first channel matrix, the null space vector of the first channel matrix, and constitute the first precoding matrix by using the null space vector of the first channel matrix; and

j 1) wherein when the first base station is a macro base station, the second base station is a pico base station, and a macro cell corresponding to the macro base station comprises a small cell corresponding to the pico base station; and

j2) when a quantity of transmit antennas of the first base station is less than or equal to a total quantity of receive antennas of all second base stations that communicate with the first base station,

j3) the apparatus further comprises a beamforming unit, configured to obtain a beamforming matrix with $J_m \times N_m$ dimensions, wherein $N_m$ is a quantity of receive antennas of the $m^{th}$ second base station that communicates with the first base station, $J_m$ is a quantity of equivalent receive antennas of the $m^{th}$ second base station that communicates with the first base station, $m$=1,2,$\cdots L$, and L is a total quantity of pico base stations corresponding to small cells in the macro cell;

j4) the equivalent channel obtaining unit is further configured to obtain, according to the beamforming matrix obtained by the beamforming unit, a second equivalent channel matrix corresponding to the first channel matrix; and

j5) the coding matrix obtaining unit is specifically configured to obtain, based on the second equivalent channel matrix obtained by the equivalent channel obtaining unit, the first precoding matrix, wherein the first precoding matrix is constituted by a null space vector of the second equivalent channel matrix.

3. Abase station, comprising the transmitting apparatus according to claim 2.

4. The base station according to claim 3, wherein the base station is a macro base station or a pico base station when the base station comprises the transmitting apparatus according to features a)-f) in claim 2;
the base station is a pico base station when the base station comprises the transmitting apparatus according to features g1)-g2) or features h1)-h5) in claim 2; or
the base station is a macro base station when the base station comprises the transmitting apparatus according features i1)-i3) or features j1-j5) of claim 2.

**Patentansprüche**

1. Drahtloses Kommunikationsverfahren, das Folgendes umfasst:

1.1 Erhalten (101) einer ersten Kanalmatrix (21), die von einer ersten Basisstation (P1, Makro) zu einer zweiten Basisstation (P2, Makro) ist;
1.2 Erhalten (102) einer zweiten Kanalmatrix (21), die von der ersten Basisstation zu einer Teilnehmereinrichtung (UE1-UE2), die von der ersten Basisstation bedient wird, ist;
1.3 Erhalten (103) einer ersten Vorcodierungsmatrix auf Basis der ersten Kanalmatrix, wobei die erste Vorcodierungsmatrix durch einen Nullraumvektor der ersten Kanalmatrix konstituiert ist; und **gekennzeichnet durch**:

1.4 Erhalten (104) einer ersten äquivalenten Kanalmatrix, die von der ersten Basisstation zur Teilnehmereinrichtung, die von der ersten Basisstation bedient wird, ist, wobei die erste äquivalente Kanalmatrix ein Produkt der zweiten Kanalmatrix und der ersten Vorcodierungsmatrix ist; und

1.5 Auswählen (105) einer zweiten Vorcodierungsmatrix für ein Übertragungssignal auf Basis der ersten äquivalenten Kanalmatrix, Durchführen einer Vorcodierung am Übertragungssignal gemäß der zweiten Vorcodierungsmatrix und Senden eines vorcodierten Übertragungssignals, wobei das Vorcodieren an der ersten Basisstation erfolgt und das vorcodierte Übertragungssignal an die Teilnehmereinrichtung, die von der ersten Basisstation bedient wird, gesendet wird;

2.1 wobei, wenn die erste Basisstation eine Picobasisstation ist, die zweite Basisstation eine Makrobasisstation (Makro) ist und eine Makrozelle, die der Makrobasisstation entspricht, eine kleine Zelle umfasst, die der Picobasisstation entspricht; und

2.2 wenn eine Menge an Sendeantennen der ersten Basisstation größer ist als eine Menge an Empfangsantennen der zweiten Basisstation, das Erhalten der ersten Vorcodierungsmatrix auf Basis der ersten Kanalmatrix, wobei die erste Vorcodierungsmatrix durch einen Nullraumvektor der ersten Kanalmatrix konstituiert ist, Folgendes umfasst:

2.3 Erhalten des Nullraumvektors der ersten Kanalmatrix auf Basis der ersten Kanalmatrix; und

2.4 Konstituieren der ersten Vorcodierungsmatrix unter Verwendung des Nullraumvektors der ersten Kanalmatrix; und

3.1 wobei, wenn die erste Basisstation eine Picobasisstation ist, die zweite Basisstation eine Makrobasisstation ist und eine Makrozelle, die der Makrobasisstation entspricht, eine kleine Zelle umfasst, die der Picobasisstation entspricht; und

3.2 wenn eine Menge an Sendeantennen der ersten Basisstation kleiner als eine Menge an Empfangsantennen der zweiten Basisstation oder mit dieser gleich ist, das Verfahren ferner Folgendes umfasst:

3.3 Erhalten (202) einer Strahlformungsmatrix mit DxN-Abmessungen, wobei N die Menge der Empfangsantennen der zweiten Basisstation ist und D eine Menge von äquivalenten Empfangsantennen der zweiten Basisstation ist; und

3.4 Erhalten (23) einer zweiten äquivalenten Kanalmatrix, die der ersten Kanalmatrix entspricht, gemäß der Strahlformungsmatrix und wobei 3.5 das Erhalten der ersten Vorcodierungsmatrix auf Basis der ersten Kanalmatrix, wobei die erste Vorcodierungsmatrix durch einen Nullraumvektor der ersten Kanalmatrix konstituiert ist, Folgendes umfasst:

3.6 Erhalten der ersten Vorcodierungsmatrix auf Basis der zweiten äquivalenten Kanalmatrix, wobei die erste Vorcodierungsmatrix durch einen Nullraumvektor der zweten äquivalenten Kanalmatrix konstituiert ist; und

4.1 wobei, wenn die erste Basisstation eine Makrobasisstation ist, die zweite Basisstation eine Picobasisstation (P2) ist und eine Makrozelle, die der Makrobasisstation entspricht, eine kleine Zelle umfasst, die der Picobasisstation entspricht; und

4.2 wenn eine Menge an Sendeantennen der ersten Basisstation größer als eine Gesamtmenge an Empfangsantennen aller zweiten Basisstationen, die mit der ersten Basisstation kommunizieren, ist,

4.3 das Erhalten der ersten Vorcodierungsmatrix auf Basis der ersten Kanalmatrix, wobei die erste Vorcodierungsmatrix durch einen Nullraumvektor der ersten Kanalmatrix konstituiert ist, Folgendes umfasst:

4.4 Erhalten des Nullraumvektors der ersten Kanalmatrix auf Basis der ersten Kanalmatrix; und

4.5 Konstituieren der ersten Vorcodierungsmatrix unter Verwendung des Nullraumvektors der ersten Kanalmatrix; und

5.1 wobei, wenn die erste Basisstation eine Makrobasisstation ist, die zweite Basisstation eine Picobasisstation ist und eine Makrozelle, die der Makrobasisstation entspricht, eine kleine Zelle umfasst, die der Picobasisstation entspricht; und

5.2 wenn eine Menge an Sendeantennen der ersten Basisstation kleiner als eine Gesamtmenge an Empfangsantennen aller zweiten Basisstationen, die mit der ersten Basisstation kommunizieren, oder mit dieser gleich ist, das Verfahren ferner Folgendes umfasst:

5.3 Erhalten einer Strahlformungsmatrix mit $J_m \times N_m$-Abmessungen, wobei $N_m$ eine Menge an Empfangsantennen der m-ten zweiten Basisstation, die mit der ersten Basisstation kommuniziert, ist, $J_m$ eine Menge an äquivalenten Empfangsantennen der m-ten zweiten Basisstation, die mit der ersten Basisstation kommuniziert, ist, $m$= 1,2,...$L$ und L eine Gesamtmenge an Picobasisstationen, die kleinen Zellen in der Makrozelle entsprechen, ist; und

5.4 Erhalten einer zweiten äquivalenten Kanalmatrix, die der ersten Kanalmatrix entspricht, gemäß der Strahlformungsmatrix; und

5.5 das Erhalten der ersten Vorcodierungsmatrix auf Basis der ersten Kanalmatrix, wobei die erste Vorcodierungsmatrix durch einen Nullraumvektor der ersten Kanalmatrix konstituiert ist, Folgendes umfasst:

5.6 Erhalten der ersten Vorcodierungsmatrix auf Basis der zweiten äquivalenten Kanalmatrix, wobei die erste Vorcodierungsmatrix durch einen Nullraumvektor der zweten äquivalenten Kanalmatrix konstituiert ist.

2. Übertragungsvorrichtung (31-34), die Folgendes umfasst:

a) eine Kanalerhaltungseinheit (21), die dazu ausgelegt ist, eine erste Kanalmatrix, die von einer ersten Basisstation (P1, Makro) zu einer zweiten Basisstation (P2, Makro) ist, zu erhalten, wobei

b) die Kanalerhaltungseinheit ferner dazu ausgelegt ist, eine zweite Kanalmatrix, die von der ersten Basisstation zu einer Teilnehmereinrichtung, die von der ersten Basisstation bedient wird, ist, zu erhalten;

c) eine Codierungsmatrixerhaltungseinheit (22), die dazu ausgelegt ist, auf Basis der ersten Kanalmatrix, die von der Kanalerhaltungseinheit erhalten wird, eine erste Vorcodierungsmatrix zu erhalten, wobei die erste Vorcodierungsmatrix durch einen Nullraumvektor der ersten Kanalmatrix konstituiert ist; und **gekennzeichnet durch**:

d) eine äquivalente Kanalerhaltungseinheit (23), die dazu ausgelegt ist, eine erste äquivalente Kanalmatrix, die von der ersten Basisstation zur Teilnehmereinrichtung, die von der ersten Basisstation bedient wird, ist, zu erhalten, wobei die erste äquivalente Kanalmatrix ein Produkt der zweiten Kanalmatrix und der ersten Vorcodierungsmatrix ist; und

e) die Codierungsmatrixerhaltungseinheit (22) ferner dazu ausgelegt ist, auf Basis der ersten äquivalenten Kanalmatrix, die von der äquivalenten Kanalerhaltungseinheit erhalten wird, eine zweite Vorcodierungsmatrix für ein Übertragungssignal auszuwählen; und

f) eine Übertragungseinheit (24), die zu Folgendem ausgelegt ist: Durchführen einer Vorcodierung am Übertragungssignal gemäß der zweiten Vorcodierungsmatrix, die von der Codierungsmatrixerhaltungseinheit erhalten wird, und Senden des vorcodierten Übertragungssignals, wobei das Vorcodieren an der ersten Basisstation erfolgt und das vorcodierte Übertragungssignal an die andere Teilnehmereinrichtung, die von der ersten Basisstation bedient wird, gesendet wird; und

g1) wobei, wenn die erste Basisstation eine Picobasisstation (P1, P2) ist, die zweite Basisstation eine Makrobasisstation (Makro) ist und eine Makrozelle, die der Makrobasisstation entspricht, eine kleine Zelle umfasst, die der Picobasisstation entspricht; und

g2) wenn eine Menge an Sendeantennen der ersten Basisstation größer ist als eine Menge an Empfangsantennen der zweiten Basisstation, die Codierungsmatrixerhaltungseinheit speziell zu Folgendem ausgelegt ist: Erhalten auf Basis der ersten Kanalmatrix des Nullraumvektors der ersten Kanalmatrix und Konstituieren der ersten Vorcodierungsmatrix unter Verwendung des Nullraumvektors der ersten Kanalmatrix; und

h1) wobei, wenn die erste Basisstation eine Picobasisstation ist, die zweite Basisstation eine Makrobasisstation ist und eine Makrozelle, die der Makrobasisstation entspricht, eine kleine Zelle umfasst, die der Picobasisstation entspricht; und

h2) wenn eine Menge an Sendeantennen der ersten Basisstation kleiner als eine Menge an Empfangsantennen der zweiten Basisstation oder mit dieser gleich ist,

h3) die Vorrichtung ferner eine Strahlformungseinheit (25) umfasst, die dazu ausgelegt ist, eine Strahlformungsmatrix mit DxN-Abmessungen zu erhalten, wobei N die Menge der Empfangsantennen der zweiten Basisstation ist und D eine Menge von äquivalenten Empfangsantennen der zweiten Basisstation ist;

h4) die äquivalente Kanalerhaltungseinheit (23) ferner dazu ausgelegt ist, eine zweite äquivalente Kanalmatrix, die der ersten Kanalmatrix entspricht, gemäß der Strahlformungsmatrix, die von der Strahlformungseinheit erhalten wird, zu erhalten; und

h5) die Codierungsmatrixerhaltungseinheit (22) speziell dazu ausgelegt ist, auf Basis der zweiten äquivalenten Kanalmatrix, die von der äquivalenten Kanalerhaltungseinheit erhalten wird, die erste Vorcodierungsmatrix zu erhalten, wobei die erste Vorcodierungsmatrix durch einen Nullraumvektor der zweiten äquivalenten Kanalmatrix konstituiert ist; und

i1) wobei, wenn die erste Basisstation eine Makrobasisstation ist, die zweite Basisstation eine Picobasisstation ist und eine Makrozelle, die der Makrobasisstation entspricht, eine kleine Zelle umfasst, die der Picobasisstation entspricht;

i2) wenn eine Menge an Sendeantennen der ersten Basisstation größer als eine Gesamtmenge an Empfangsantennen aller zweiten Basisstationen, die mit der ersten Basisstation kommunizieren, ist, und

i3) die Codierungsmatrixerhaltungseinheit speziell zu Folgendem ausgelegt ist: Erhalten der ersten Kanalmatrix des Nullraumvektors auf Basis der ersten Kanalmatrix und Konstituieren der ersten Vorcodierungsmatrix unter Verwendung des Nullraumvektors der ersten Kanalmatrix; und

j1) wobei, wenn die erste Basisstation eine Makrobasisstation ist, die zweite Basisstation eine Picobasisstation ist und eine Makrozelle, die der Makrobasisstation entspricht, eine kleine Zelle umfasst, die der Picobasisstation entspricht; und

j2) wenn eine Menge an Sendeantennen der ersten Basisstation kleiner als eine Gesamtmenge an Empfangsantennen aller zweiten Basisstationen, die mit der ersten Basisstation kommunizieren, oder mit dieser gleich ist,

j3) die Vorrichtung ferner eine Strahlformungseinheit umfasst, die dazu ausgelegt ist, eine Strahlformungsmatrix mit $J_m \times N_m$-Abmessungen zu erhalten, wobei $N_m$ eine Menge an Empfangsantennen der m-ten zweiten Basisstation, die mit der ersten Basisstation kommuniziert, ist, $J_m$ eine Menge an äquivalenten Empfangsantennen der m-ten zweiten Basisstation, die mit der ersten Basisstation kommuniziert, ist, $m = 1,2,...L$ und L eine Gesamtmenge an Picobasisstationen, die kleinen Zellen in der Makrozelle entsprechen, ist;

j4) die äquivalente Kanalerhaltungseinheit ferner dazu ausgelegt ist, eine zweite äquivalente Kanalmatrix, die der ersten Kanalmatrix entspricht, gemäß der Strahlformungsmatrix, die von der Strahlformungseinheit erhalten wird, zu erhalten; und

j5) die Codierungsmatrixerhaltungseinheit speziell dazu ausgelegt ist, auf Basis der zweiten äquivalenten Kanalmatrix, die von der äquivalenten Kanalerhaltungseinheit erhalten wird, die erste Vorcodierungsmatrix zu erhalten, wobei die erste Vorcodierungsmatrix durch einen Nullraumvektor der zweiten äquivalenten Kanalmatrix konstituiert ist.

3. Basisstation, die die Übertragungsvorrichtung nach Anspruch 2 umfasst.

4. Basisstation nach Anspruch 3, wobei die Basisstation eine Makrobasisstation oder eine Picobasisstation ist, wenn die Basisstation die Übertragungsvorrichtung gemäß den Merkmalen a)-f) in Anspruch 2 umfasst;

die Basisstation eine Picobasisstation ist, wenn die Basisstation die Übertragungsvorrichtung gemäß den Merkmalen g1)-g2) oder den Merkmalen h1)-h5) in Anspruch 2 umfasst; oder

die Basisstation eine Makrobasisstation ist, wenn die Basisstation die Übertragungsvorrichtung gemäß den Merkmalen i1)-i3) oder den Merkmalen j1)-j5) in Anspruch 2 umfasst.

**Revendications**

1. Procédé de communication sans fil consistant :

1.1 à obtenir (101) une première matrice de canal (21), qui va d'une première station de base (P1, Macro) à une seconde station de base (P2, Macro) ;

1.2 à obtenir (102) une seconde matrice de canal (21) qui va de la première station de base à un équipement utilisateur (UE1 à UE2) desservi par la première station de base ;

1.3 à obtenir (103), en se basant sur la première matrice de canal, une première matrice de précodage, dans lequel la première matrice de précodage est constituée d'un vecteur d'espace nul de la première matrice de canal ; et **caractérisé en ce qu'**il consiste :

1.4 à obtenir (104) une première matrice de canal équivalent, qui va de la première station de base à l'équipement utilisateur desservi par la première station de base, dans lequel la première matrice de canal équivalent est un produit de la seconde matrice de canal et de la première matrice de précodage ; et

1.5 à sélectionner (105), en se basant sur la première matrice de canal équivalent, une seconde matrice de précodage pour un signal de transmission, à effectuer un précodage sur le signal de transmission en fonction de la seconde matrice de précodage et à envoyer un signal de transmission précodé, dans lequel le précodage a lieu au niveau de la première station de base et le signal de transmission précodé est envoyé à l'équipement utilisateur desservi par la première station de base ;

2.1 dans lequel, lorsque la première station de base est une station de base pico, la seconde station de base est une station de base macro (Macro) et une cellule macro correspondant à la station de base macro comprend une petite cellule correspondant à la station de base pico ; et

2.2 lorsqu'une quantité d'antennes de transmission de la première station de base est supérieure à une quantité d'antennes de réception de la seconde station de base, l'obtention, en se basant sur la première matrice de canal, de la première matrice de précodage, dans lequel la première matrice de précodage est constituée d'un vecteur d'espace nul de la première matrice de canal, consiste :

    2.3 à obtenir, en se basant sur la première matrice de canal, le vecteur d'espace nul de la première matrice de canal ; et

    2.4 à constituer la première matrice de précodage en utilisant le vecteur d'espace nul de la première matrice de canal ; et

3.1 dans lequel, lorsque la première station de base est une station de base pico, la seconde station de base est une station de base macro et une cellule macro correspondant à la station de base macro comprend une petite cellule correspondant à la station de base pico ; et

3.2 lorsqu'une quantité d'antennes de transmission de la première station de base est inférieure ou égale à une quantité d'antennes de réception de la seconde station de base, le procédé consiste en outre :

    3.3 à obtenir (2002) une matrice de formation de faisceau ayant D x N dimensions, dans lequel N est la quantité d'antennes de réception de la seconde station de base et D est une quantité d'antennes de réception équivalentes de la seconde station de base ; et

    3.4 à obtenir (23), en fonction de la matrice de formation de faisceau, une seconde matrice de canal équivalent correspondant à la première matrice de canal ; et dans lequel

3.5 l'obtention, en se basant sur la première matrice de canal, de la première matrice de précodage, dans lequel la première matrice de précodage est constituée d'un vecteur d'espace nul de la première matrice de canal, consiste :

    3.6 à obtenir, en se basant sur la seconde matrice de canal équivalent, la première matrice de précodage, dans lequel la première matrice de précodage est constituée d'un vecteur d'espace nul de la seconde matrice de canal équivalent ; et

    4.1 dans lequel, lorsque la première station de base est une station de base macro, la seconde station de base est une station de base pico (P2) et une cellule macro correspondant à la station de base macro comprend une petite cellule correspondant à la station de base pico ; et

4.2 lorsqu'une quantité d'antennes de transmission de la première station de base est supérieure à une quantité totale d'antennes de réception de toutes les secondes stations de base qui communiquent avec la première station de base,

4.3 l'obtention, en se basant sur la première matrice de canal, de la première matrice de précodage, dans lequel la première matrice de précodage est constituée d'un vecteur d'espace nul de la première matrice de canal, consiste :

    4.4 à obtenir, en se basant sur la première matrice de canal, le vecteur d'espace nul de la première matrice de canal ; et

    4.5 à constituer la première matrice de précodage en utilisant le vecteur d'espace nul de la première matrice de canal ; et

5.1 dans lequel, lorsque la première station de base est une station de base macro, la seconde station de base est une station de base pico et une cellule macro correspondant à la station de base macro comprend une petite cellule correspondant à la station de base pico ; et

5.2 lorsqu'une quantité d'antennes de transmission de la première station de base est inférieure ou égale à une quantité totale d'antennes de réception de toutes les secondes stations de base qui communiquent avec la première station de base, le procédé consiste en outre :

    5.3 à obtenir une matrice de formation de faisceau ayant Jm x Nm dimensions, dans lequel Nm est une quantité d'antennes de réception de la mième seconde station de base qui communique avec la première station de base, Jm est une quantité d'antennes de réception équivalentes de la mième seconde station de base qui communique avec la première station de base, m = 1, 2, ..., L et L est une quantité totale de stations de base pico correspondant à des petites cellules dans la cellule macro ; et

5.4 à obtenir, en fonction de la matrice de formation de faisceau, une seconde matrice de canal équivalent correspondant à la première matrice de canal ; et 5.5 l'obtention, en se basant sur la première matrice de canal, de la première matrice de précodage, dans lequel la première matrice de précodage est constituée d'un vecteur d'espace nul de la première matrice de canal, consiste :

5.6 à obtenir, en se basant sur la seconde matrice de canal équivalent, la première matrice de précodage, dans lequel la première matrice de précodage est constituée d'un vecteur d'espace nul de la seconde matrice de canal équivalent.

2. Appareil de transmission (31 à 34) comprenant :

a) une unité d'obtention de canal (21), configurée pour obtenir une première matrice de canal qui va d'une première station de base (P1, Macro) à une seconde station de base (P2, Macro), dans lequel

b) l'unité d'obtention de canal est en outre configurée pour obtenir une seconde matrice de canal qui va de la première station de base à un équipement utilisateur desservi par la première station de base ;

c) une unité d'obtention de matrice de codage (22), configurée pour obtenir, en se basant sur la première matrice de canal obtenue par l'unité d'obtention de canal, une première matrice de précodage, dans lequel la première matrice de précodage est constituée d'un vecteur d'espace nul de la première matrice de canal ; et **caractérisé par** :

d) une unité d'obtention de canal équivalent (23), configurée pour obtenir une première matrice de canal équivalent, qui va de la première station de base à l'équipement utilisateur desservi par la première station de base, dans lequel la première matrice de canal équivalent est un produit de la seconde matrice de canal et de la première matrice de précodage ; et

e) l'unité d'obtention de matrice de codage (22) est en outre configurée pour sélectionner, en se basant sur la première matrice de canal équivalent obtenue par l'unité d'obtention de canal équivalent, une seconde matrice de précodage pour un signal de transmission ; et

f) une unité de transmission (24), configurée : pour effectuer un précodage sur le signal de transmission en fonction de la seconde matrice de précodage obtenue par l'unité d'obtention de matrice de codage, et pour envoyer un signal de transmission précodé, dans lequel le précodage a lieu au niveau de la première station de base et le signal de transmission précodé est envoyé à l'équipement utilisateur desservi par la première station de base ; et

g1) dans lequel, lorsque la première station de base est une station de base pico (P1, P2), la seconde station de base est une station de base macro (Macro) et une cellule macro correspondant à la station de base macro comprend une petite cellule correspondant à la station de base pico ; et

g2) lorsqu'une quantité d'antennes de transmission de la première station de base est supérieure à une quantité d'antennes de réception de la seconde station de base, l'unité d'obtention de matrice de codage est spécialement configurée : pour obtenir, en se basant sur la première matrice de canal, le vecteur d'espace nul de la première matrice de canal, et pour constituer la première matrice de précodage en utilisant le vecteur d'espace nul de la première matrice de canal ; et

h1) dans lequel, lorsque la première station de base est une station de base pico, la seconde station de base est une station de base macro et une cellule macro correspondant à la station de base macro comprend une petite cellule correspondant à la station de base pico ; et

h2) lorsqu'une quantité d'antennes de transmission de la première station de base est inférieure ou égale à une quantité d'antennes de réception de la seconde station de base,

h3) l'appareil comprend en outre une unité de formation de faisceau (25), configurée pour obtenir une matrice de formation de faisceau ayant D x N dimensions, dans lequel N est la quantité d'antennes de réception de la seconde station de base et D est une quantité d'antennes de réception équivalentes de la seconde station de base ;

h4) l'unité d'obtention de canal équivalent (23) est en outre configurée pour obtenir, en fonction de la matrice de formation de faisceau obtenue par l'unité de formation de faisceau, une seconde matrice de canal équivalent correspondant à la première matrice de canal ; et

h5) l'unité d'obtention de matrice de codage (22) est spécialement configurée pour obtenir, en se basant sur la seconde matrice de canal équivalent obtenue par l'unité d'obtention de canal équivalent, la première matrice de précodage, dans lequel la première matrice de précodage est constituée d'un vecteur d'espace nul de la seconde matrice de canal équivalent ; et

i1) dans lequel, lorsque la première station de base est une station de base macro, la seconde station de base est une station de base pico et une cellule macro correspondant à la station de base macro comprend une petite cellule correspondant à la station de base pico ;

i2) lorsqu'une quantité d'antennes de transmission de la première station de base est supérieure à une quantité totale d'antennes de réception de toutes les secondes stations de base qui communiquent avec la première station de base, et

i3) l'unité d'obtention de matrice de codage est spécifiquement configurée : pour obtenir, en se basant sur la première matrice de canal, le vecteur d'espace nul de la première matrice de canal et pour constituer la première matrice de précodage en utilisant le vecteur d'espace nul de la première matrice de canal ; et

j1) dans lequel, lorsque la première station de base est une station de base macro, la seconde station de base est une station de base pico et une cellule macro correspondant à la station de base macro comprend une petite cellule correspondant à la station de base pico ; et

j2) lorsqu'une quantité d'antennes de transmission de la première station de base est inférieure ou égale à une quantité totale d'antennes de réception de toutes les secondes stations de base qui communiquent avec la première station de base,

j3) l'appareil comprend en outre une unité de formation de faisceau configurée pour obtenir une matrice de formation de faisceau ayant Jm x Nm dimensions, dans lequel Nm est une quantité d'antennes de réception de la mième seconde station de base qui communique avec la première station de base, Jm est une quantité d'antennes de réception équivalentes de la mième seconde station de base qui communique avec la première station de base, m = 1, 2, ..., L et L est une quantité totale de stations de base pico correspondant à des petites cellules dans la cellule macro ; et

j4) l'unité d'obtention de canal équivalent est en outre configurée pour obtenir, en fonction de la matrice de formation de faisceau obtenue par l'unité de formation de faisceau, une seconde matrice de canal équivalent correspondant à la première matrice de canal ; et

j5) l'unité d'obtention de matrice de codage est spécialement configurée pour obtenir, en se basant sur la seconde matrice de canal équivalent obtenue par l'unité d'obtention de canal équivalent, la première matrice de précodage, dans lequel la première matrice de précodage est constituée d'un vecteur d'espace nul de la seconde matrice de canal équivalent.

3. Station de base comprenant l'appareil de transmission selon la revendication 2.

4. Station de base selon la revendication 3, dans laquelle la station de base est une station de base macro ou une station de base pico lorsque la station de base comprend l'appareil de transmission selon les caractéristiques a) à f) dans la revendication 2 ;
la station de base est une station de base pico lorsque la station de base comprend l'appareil de transmission selon les caractéristiques g1) à g2) ou les caractéristiques h1) à h5) dans la revendication 2 ; ou
la station de base est une station de base macro lorsque la station de base comprend l'appareil de transmission selon les caractéristiques i1) à i3) ou les caractéristiques j1) à j5) de la revendication 2.

FIG. 1

Transmitting apparatus

Channel obtaining unit 21

Coding matrix obtaining
unit 22

Equivalent channel
obtaining unit 23

Transmitting unit 24

FIG. 2

FIG. 3

FIG. 4

$r_k^0$  k$^{th}$ UE

$r_m$

Macro     Pico

FIG. 5

Receiving apparatus

Channel obtaining unit 31

Beamforming matrix
obtaining unit 32

Receiving unit 33

FIG. 6

FIG. 7

| Obtain a first channel matrix that is from a first base station to a second base station | 101 |

↓

| Obtain a second channel matrix that is from the first base station to user equipment served by the first base station | 102 |

↓

| Obtain, based on the first channel matrix, a first precoding matrix | 103 |

↓

| Obtain a first equivalent channel matrix that is from the first base station to the user equipment served by the first base station | 104 |

↓

| Select, based on the first equivalent channel matrix, a second precoding matrix for a transmit signal, perform precoding on the transmit signal according to the second precoding matrix, and send a precoded transmit signal | 105 |

FIG. 8

| Obtain a first channel matrix that is from a pico base station to a macro base station | 201 |

↓

| Obtain, based on the first channel matrix, a first beamforming matrix | 202 |

↓

| Receive, by using the first beamforming matrix, a signal sent by user equipment served by the macro base station | 203 |

FIG. 9

Transmitting apparatus — Processor (31) — Transmitter (33)

Bus (34)

Memory

Application program | Operating system | Data

32

FIG. 10

41    43

Receiving apparatus    Processor    Receiver    44

Bus

Memory

Application program    Operating system    Data

42

FIG. 11D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014010197 A1